# FASCICULE DE BREVET EUROPEEN

(11) **EP 2 201 280 B1**
(45) Date de publication et mention de la délivrance du brevet: **30.11.2011**
(21) Numéro de dépôt: 08842313.2
(22) Date de dépôt: 06.10.2008
(51) Int. Cl.: F16L 1/20, F16L 1/19, F16L 1/23, F16L 1/235, E21B 17/01

(54) **SUPPORT FLOTTANT COMPRENANT UN DISPOSITIF DE RETENUE ET MAINTIEN D'UNE CONDUITE SOUS-MARINE**
SCHWIMMENDER TRÄGER MIT EINER VORRICHTUNG ZUM HALTEN UND SICHERN EINES UNTERWASSERROHRS
FLOATING SUPPORT COMPRISING A DEVICE FOR THE RETENTION AND SECURING OF A SUBSEA PIPE

(30) Priorité: 23.10.2007 FR 0758503
(43) Date de publication de la demande: 30.06.2010
(73) Titulaire: Saipem SA, 78180 Montigny-le-Bretonneux (FR)
(72) Inventeur: PIONETTI, François-Régis, F-50450 La Baleine (FR)
(74) Mandataire: Domange, Maxime
(86) Numéro de dépôt international: PCT/FR2008/051805
(87) Numéro de publication internationale: WO 2009/053599

(56) Documents cités:
- WO-A-2007/096548
- US-B1- 6 273 643

## Description

La présente invention concerne un support flottant comprenant un dispositif de retenue et maintien d'une conduite sous-marine, notamment une conduite dont l'extrémité est retenue et maintenue en suspension en position inclinée ou verticale au niveau d'un support flottant consistant en un navire de pose, et s'étend jusqu'au fond de la mer, ledit dispositif de retenue et de maintien permettant de réaliser l'assemblage successif de tronçons de conduite bout à bout, de préférence par soudage à bord dudit support flottant ou navire de pose.

Le mot « support flottant » désigne ici tout ensemble flottant déplaçable, y compris un navire, apte à permettre la pose d'une conduite.

Plus particulièrement, l'invention s'applique notamment à la pose d'une conduite sous-marine constituée de tronçons rectilignes encore appelés « rames » assemblées entre elles par soudage bout à bout à bord du navire, mesurant en général 24 ou 48 m, la conduite étant donc posée par assemblage et descente de proche en proche des rames successives, chaque tronçon ou « rame » pouvant être elle-même constituée de plusieurs éléments unitaires de conduite assemblés par soudage - en général à terre - pour constituer une rame.

La présente invention concerne également un support flottant comprenant un dispositif de retenue et maintien pour le raccordement et la pose des parties successives d'une conduite sous-marine depuis ledit support flottant.

La présente invention s'applique donc au maintien en suspension d'une conduite sensiblement verticale, mais aussi et à tout type de conduite destinée à véhiculer un fluide, un courant électrique, des signaux optiques ou des informations et notamment à des conduites tubulaires rigides ou flexibles, des ombilicaux et des câbles électriques. Elle s'applique en particulier à des conduites sous-marine manutentionnées depuis un navire effectuant des opérations d'installation, notamment par de très grandes profondeurs d'eau, c'est à dire vers 1000 m de profondeur et au delà.

La présente invention concerne plus particulièrement la pose de conduites constituées d'un ensemble de conduites coaxiales comprenant une conduite interne et une conduite externe, notamment des conduites sous-marines véhiculant des fluides chauds ou froids, de préférence des conduites sous-marines destinées aux grandes profondeurs. Ces conduites coaxiales sont dites "Pipe In Pipe" ou PIP, c'est à dire "conduite dans une conduite", dans laquelle une conduite interne véhicule le fluide et une conduite externe coaxiale à la précédente est en contact avec le milieu ambiant, c'est-à-dire l'eau. L'espace annulaire entre les deux conduites peut être rempli d'un matériau isolant ou encore être vidé de tout gaz.

Dans le cadre des installations par grande profondeur, les conduites sous-marines ainsi que les ensembles de conduites coaxiales sous-marines sont assemblés à terre en éléments de longueur unitaire, de l'ordre de 10 à 100 m selon la capacité de tenue en charge du système de pose. Puis ils sont transportés ainsi en mer sur un navire de pose. Lors de la pose, les longueurs unitaires des divers éléments d'ensembles de conduites coaxiales sont raccordées les unes aux autres à bord du navire et au fur et à mesure de leur pose en mer. Il est donc important que ce raccordement puisse être réalisé rapidement et aisément.

Pour ce faire, on utilise des pièces de jonction ou pièces de raccordement forgées en acier, assemblées aux extrémités desdits éléments d'ensembles de conduites coaxiales à assembler. La pièce de jonction à l'extrémité aval d'un premier élément d'ensemble de conduites coaxiales non encore assemblées, étant raccordée à la pièce de jonction à l'extrémité libre amont d'un deuxième élément d'ensemble de conduites coaxiales déjà assemblées en aval.

Plus particulièrement une dite pièce forgée de jonction à l'extrémité d'un élément de conduite coaxiale comprend à chaque extrémité deux branches de révolution dont une branche externe et une branche interne formant une fourche délimitant un dit espace annulaire, dont une fourche dont les extrémités cylindriques libres sont assemblées aux extrémités cylindriques respectivement des conduites externes et internes, l'autre fourche ayant ses extrémités assemblées aux extrémités en vis-à-vis de la pièce de jonction de l'autre élément de conduite coaxial.

Ces pièces de jonction forgées visent également à renforcer la résistance des conduites soumises à des flexions importantes au cours de la pose, notamment dans la zone de raccordement de 2 dites longueurs unitaires successives ou de rames successives, et plus particulièrement dans le cas de liaison fond-surface, à leur conférer une très grande résistance à la fatigue durant toute la durée de vie des installations. Des conduites coaxiales et pièces de jonction de ce type ont été décrites notamment dans FR 2873427.

L'assemblage préalable des différentes parties de conduite à bord du navire, puis la pose de proche en proche de la conduite au fond de la mer par assemblage de rames puis immersion de la conduite au fur et à mesure que les rames sont assemblées, se fait traditionnellement, notamment pour la pose de conduite sous-marine à des profondeurs dépassant 1000m, voire supérieures à 2000 m, à partir de navire ou support flottant équipé d'une tour, articulée ou non, comprenant des moyens de manutention ou préhenseurs, par une méthode dite de pose en J dans laquelle la conduite sous-marine en suspension adopte une configuration courbée entre son point d'accrochage en surface au niveau du navire et son point de contact avec le fond de la mer, ladite forme correspondant à la courbe mathématique dite de chaînette pour laquelle le rayon de courbure augmente régulièrement depuis le fond jusqu'à la surface.

Cette pose est appelée pose en J car la forme de la portion de conduite en suspension entre le navire et le point de contact sur le fond de la mer est assimilée improprement à une forme en J. Cette pose en J est décrite dans de nombreux brevets, notamment les brevets au nom de la demanderesse FR 2792991, FR 2793540 et FR 2801088 entre autres.

Dans ces brevets, on décrit un navire de pose équipé d'une tour de pose en J qui permet les opérations suivantes :
- maintenir stable l'extrémité supérieure émergée de la partie de conduite déjà assemblée immergée en suspension,
- descendre une nouvelle partie de conduite ou rame, présenter à ladite extrémité supérieure émergée de la dite partie de conduite en suspension, l'extrémité inférieure de la dite nouvelle partie de conduite ou rame,
- maintenir fermement les extrémités des parties de conduite à assembler par soudage pour que ladite soudure puisse être effectuée sans risque d'endommagement dû aux divers mouvements du navire et de la portion de conduite immergée en suspension jusqu'au fond de la mer, et enfin
- souder lesdites parties de conduite.

Dans cette pose en J, la difficulté réside dans le fait que toutes les opérations énumérées ci-dessus doivent être effectuées en un seul emplacement situé au niveau du pont du navire, donc près de l'extrémité inférieure de la tour, et de plus, toutes les opérations doivent être exécutées en un temps minimum en raison du coût opérationnel horaire extrêmement élevé du navire d'installation.

La conduite en cours d'assemblage est en général maintenue en partie basse de la tour de pose en J par un système de clamps externe.

L'utilisation de clamps à coins marquants en acier pour immobiliser la portion de conduite suspendue présente l'inconvénient de laisser des traces sur l'extérieur de la conduite, et surtout d'endommager le revêtement anticorrosion. De nombreux autres types de clamps ont été développés, basés essentiellement sur des systèmes articulés à genouillère ou à verrouillage par came, les mouvements d'enclenchement et de dégagement du clamp étant souvent réalisés au moyen de vérins hydrauliques.

De tels clamps sont bien adaptés lorsque les charges sont faibles, mais dans les très grandes profondeurs, par exemple 2500 m, le poids des conduites peut dépasser 500 tonnes et il est nécessaire de garantir un niveau de sécurité extrêmement élevé quelque soit le type de conduite, pendant les phases de raboutage qui peuvent durer de 15 à 45 minutes par cycle, ou encore en cas d'interruption des opérations pour diverses raisons telles que des incidents d'équipement ou une tempête, laquelle peut durer plusieurs jours. Si l'on ne cherche pas à préserver l'intégrité du revêtement extérieur de la conduite, les clamps à coins marquants tels que décrits précédemment remplissent parfaitement la fonction de retenir la conduite même si elle présente des irrégularités de diamètre, mais dès lors que ledit revêtement est fragile, ce type de clamp ne peut plus être employé.

De nombreuses solutions ont été développées pour éviter d'endommager l'extérieur des conduites, mais elles ne sont pas adaptées aux charges extrêmes car elles présentent l'inconvénient de ne pas assurer une sécurité positive en cas d'amorçage de phénomènes de glissement, ce qui risque de créer des accidents considérables, non seulement au niveau des matériels, mais aussi au niveau du personnel.

Dans le brevet FR 2801088 de la demanderesse, on décrit un clamp fonctionnant sur le principe du frottement impliquant la mise en oeuvre de vérins disposés sensiblement perpendiculairement à la surface externe de la conduite et venant la pincer.

Lorsque la profondeur de pose augmente, les conduites ont en général un poids linéaire accru du fait qu'elles doivent pouvoir résister à l'implosion, car elles sont posées vides, c'est-à-dire que la pression à l'intérieur de la conduite est sensiblement la pression atmosphérique, alors que la pression externe est sensiblement de 100bars, soit 10MPa pour 1000m de profondeur. Ainsi, non seulement la longueur suspendue augmente avec la profondeur d'eau, mais aussi l'épaisseur de ladite conduite, donc son poids unitaire. Les tensions de pose peuvent alors atteindre et dépasser 1200-1500 tonnes, voire plus, et les clamps à friction de FR 2 801 088 présentent alors des dimensions et une complexité trop grande, pour atteindre un très haut niveau de fiabilité dans le fonctionnement des installations de pose. De plus, les dimensions très importantes de tels dispositifs créent une prise au courant et à la houle considérablement accrue, ce qui nécessite un surcroît de puissance de la part du positionnement dynamique du navire dont la position doit être maintenue avec une grande précision.

Dans US-6,273,643, on décrit un système de maintien et retenue de la conduite dans une tour, dans lequel l'extrémité supérieure de la conduite est fixée rigidement à une plate-forme solidaire de l'extrémité inférieure de la tour et l'inclinaison ou la courbure de la conduite en dessous de la fixation rigide de son extrémité supérieure est contrôlée par un dispositif à structure tubulaire comprenant un grand nombre de rouleaux de manière à maintenir la conduite sensiblement dans l'axe de la structure tubulaire.

Une installation de ce type peut générer des contraintes mécaniques non uniformes au niveau de la jonction conduite-tour, ce qui requiert de prévoir des coefficients de sécurité s'agissant de la résistance mécanique des pièces de jonction rigide et donc des pièces mécaniques de jonction coûteuses.

Ainsi le problème posé est de maintenir en tension une conduite sous-marine en cours de pose avec un dispositif et procédé de retenue et maintien de la conduite amélioré, plus simples et moins coûteux à réaliser et mettre en oeuvre, tout en conservant un niveau de fiabilité maximale.

Pour ce faire la présente invention fournit un support flottant comprenant un dispositif de retenue et maintien d'une conduite sous-marine en suspension à partir dudit support flottant, la conduite comportant une première pièce forgée de révolution soudée à l'extrémité supérieure de ladite conduite formant une section de conduite tubulaire interne sensiblement de même diamètre que celui de ladite conduite, caractérisé en ce que le dit dispositif de retenue et maintien comprend :
a- une dite première pièce forgée comprenant une première protubérance radiale périphérique sur sa surface externe, ladite première protubérance radiale comprenant en sous face une première surface de contact de révolution,
b- au moins un premier collier verrouillé de façon amovible autour et contre ladite première pièce forgée en sous face de la dite protubérance au niveau de ladite première surface de contact de ladite première protubérance, ladite première surface de contact coopérant en appui sur une deuxième surface de contact de révolution du dit premier collier, ledit premier collier formant une deuxième protubérance radiale, de préférence une deuxième protubérance de révolution, de plus grand diamètre que ladite première protubérance, ladite deuxième protubérance étant apte à retenir les extrémités de bras de préhension installé sur ledit support flottant et permettant de lever ou descendre ladite conduite en translation par rapport audit support flottant sensiblement dans l'axe Z₁Z'₁ de la dite conduite à son extrémité supérieure, et
c- un moyen de support reposant sur une plateforme fixe traversée dans un premier passage par la conduite, la dite plateforme étant solidaire dudit support flottant, le dit moyen de support et la dite plateforme entourant ladite conduite et supportant directement ou indirectement ledit premier collier, ledit premier collier présentant une troisième surface de contact de révolution en sous face dudit premier collier et coopérant en appui directement ou indirectement sur ledit moyen de support, ledit moyen de support comportant un moyen de transfert de charge et d'articulation en rotation (ci- après dénommé en abrégé « moyen d'articulation en rotation ») permettant le guidage de l'inclinaison de l'axe Z₁Z'₁ de la dite conduite à sa dite extrémité supérieure dans un cône virtuel d'angle au sommet 2α inférieur à 10°, de préférence inférieur à 5° par rapport à un axe ZZ' perpendiculaire à la dite plateforme, et assurant une répartition sensiblement uniforme des charges sur toute les dites surfaces de contact lorsque la dite conduite exerce un appui non uniforme sur les dites surfaces de contact et ledit moyen de support, provocant une dite inclinaison de la conduite.

On comprend que :
- les dites première pièce forgée, premier collier, et surfaces de contact comprennent le même axe de révolution correspondant à l'axe de ladite extrémité supérieure de conduite, et
- ledit moyen de transfert de charge et d'articulation en rotation permet une articulation libre en rotation de l'axe Z₁Z'₁ des dites première pièce forgée, premier collier et dites première, deuxième et troisième surfaces de contact dans la limite dudit cône d'angle au sommet 2α par rapport à l'axe ZZ' perpendiculaire à ladite plateforme, et assure une répartition uniforme des charges et contraintes mécaniques sur les dites surfaces de contact, et
- ledit moyen d'articulation en rotation a un effet de recentrage partiel de la conduite lorsque celle-ci est inclinée par rapport à l'axe ZZ'.

Le dispositif de retenue et maintien selon la présente invention consiste essentiellement à créer une première protubérance ou excroissance localisée au niveau de la partie supérieure de rame ou partie de conduite installée, notamment au niveau de pièces forgées servant à assembler les parties de conduite, et au moins un dit premier collier supportant la dite première protubérance créée par la pièce forgée, ledit premier collier coopérant en appui sur une dite articulation en rotation de sorte que le transfert de charges au niveau de l'interface entre conduite et le dispositif de retenue et maintien est sensiblement isostatique sur toute lesdites surfaces de contact de révolution dudit dispositif de retenue et maintien, quels que soient les mouvements respectifs du navire ou de ladite conduite, l'un vis-à-vis de l'autre. En effet, ledit moyen d'articulation en rotation permet de répartir de manière uniforme les contraintes mécaniques de compression, de cisaillement et de flexion sur toutes lesdites surfaces de contact dudit dispositif selon l'invention.

On comprend que :
- ladite conduite est retenue au niveau de la dite plateforme par ladite première surface de contact de révolution en appui par-dessus ladite deuxième surface de contact sur laquelle elle repose et le diamètre interne de passage du premier collier est plus petit que le diamètre externe de ladite première protubérance,
- ledit premier collier, dit moyen de support, et dit moyen d'articulation ont un même axe de révolution commun ZZ' correspondant audit axe dudit dispositif de retenue et maintien, et correspondant à celui de ladite première pièce forgée lorsque ladite conduite et ledit dispositif selon l'invention sont en position de contrainte minimale de repos, et
- ladite première protubérance vient de matière avec ladite première pièce forgée et présente de par sa géométrie une épaisseur suffisante pour que le niveau de la contrainte de compression à l'interface au niveau de la dite première surface de contact soit d'un niveau acceptable, étant entendu que ladite contrainte est répartie de manière sensiblement uniforme sur la périphérie de ladite première surface de contact.

Mais, la mise en oeuvre d'un dit premier collier permet de minimiser les dimensions de ladite première protubérance ce qui permet d'éviter une trop grande variation d'inertie de ladite première pièce forgée. Le fait que ladite première protubérance coopère avec ledit premier collier permet plus généralement d'éviter la mise en oeuvre de pièce forgée de trop grande dimension et donc coûteuse et difficile à réaliser et mettre en oeuvre. Enfin, le fait que ladite première protubérance soit une partie de pièce forgée lui confère une fiabilité mécanique accrue en termes de transfert de charge optimal.

Cette protubérance permet de transférer la charge due au poids de la conduite directement à la partie massive, car épaisse de la pièce forgée, ce qui a pour effet de transférer ladite charge aux deux conduites externe et interne, ce qui assure ainsi un transfert optimal des contraintes au sein des deux conduites coaxiales en suspension.

L'épaisseur de la protubérance est fonction de la charge à supporter laquelle est fonction de la longueur de la conduite et du diamètre extérieur de la conduite, et donc de la profondeur de pose.

Plus particulièrement, pour des profondeurs allant jusqu'à au-delà de 3500m, ladite première protubérance présente une épaisseur de 10 à 50mm, de préférence inférieure à 30mm, de préférence encore de 15 à 25mm correspondant à une augmentation du diamètre externe maximal de la protubérance par rapport au diamètre de la surface cylindrique de la partie courante de ladite première forgée de 20 à 100 mm, de préférence inférieur à 60mm, de préférence encore de 15 à 25 mm.

On entend ici par « épaisseur », l'augmentation de la distance radiale maximale c'est-à-dire du rayon maximal de la surface externe de la pièce forgée au niveau de ladite protubérance par rapport au rayon de la surface cylindrique de la partie courante de la pièce forgée au dessus et au dessous de la protubérance, laquelle correspond à la moitié de l'augmentation du diamètre externe maximal de la protubérance par rapport au diamètre de la surface cylindrique de la partie courante de ladite première forgée.

Plus particulièrement encore, ladite deuxième protubérance résulte d'une échancrure périphérique créée dans la surface externe dudit premier collier.

Avantageusement, ledit dispositif d'articulation en rotation a un « effet d'auto centrage » de la conduite lorsque celle-ci est inclinée par mouvement dudit support flottant. On comprend que ledit effet d'auto centrage consiste à recentrer la conduite, de manière à faire coïncider l'axe longitudinal de la conduite avec l'axe dudit cône après une dite inclinaison.

Dans un mode de réalisation, ledit moyen de support est une pièce de support de révolution solidaire dudit support flottant, reposant sur la dite plateforme, la dite pièce support comportant un premier orifice de passage central, de diamètre plus grand que celui de ladite première protubérance, et ledit moyen de transfert de charge et d'articulation en rotation permet une articulation libre en rotation de l'axe des dites première pièce forgée, premier collier et dites surfaces de contact dans la limite dudit cône d'angle au sommet 2α par rapport à l'axe ZZ' de la dite pièce de support et du dit premier orifice de passage central.

Dans un mode de réalisation, ledit moyen de transfert de charges et d'articulation en rotation est un moyen d'articulation flexible comprenant une butée lamifiée de révolution comprenant une pluralité de couches élastomère intercalées entre des renforts rigides, de préférence métalliques, définissant au repos des surfaces de révolution de même axe que l'axe de révolution ZZ' de la dite première pièce forgée, dite pièce support, et dit premier collier.

Ladite surface de révolution des couches élastomère peut être de forme tronconique, annulaire, plane ou forme de surface gauche, telle qu'une surface de forme de section ellipsoïdale ou de section parabolique ou hyperbolique, ou de préférence, de section sphérique.

On entend ici par "surface de révolution de forme tronconique ou forme de section ellipsoïdale, parabolique ou hyperbolique", une surface de révolution respectivement ellipsoïdale, parabolique ou hyperbolique délimitée par deux plans de section parallèles et perpendiculaires à leur axe de révolution.

En particulier, de par la forme des couches élastomères desdites butées lamifiées de forme tronconique ou sphérique, notamment dans le cas de butées lamifiées de section sphérique dites butées lamifiées sphériques, les contraintes ainsi que les déformations engendrées au niveau desdites butées lamifiées et dite pièce forgée, sont minimisées et permettent de maintenir ou rétablir en position sensiblement coaxiale ledit dispositif selon l'invention et dite conduite.

Dans un second mode de réalisation, ledit moyen de transfert de charge et d'articulation en rotation et ledit moyen de support sont constitués par une pluralité de vérins hydrauliques, de préférence au moins 3 vérins hydrauliques régulièrement répartis autour dudit premier passage de ladite plateforme et de ladite conduite, les corps de vérins reposant sur ladite plateforme autour dudit premier passage à travers lequel passe la conduite, et les tiges ou pistons desdits vérins comportant de préférence à leurs extrémités des petites rotules d'articulation libre en rotation, les dites extrémités de tiges de vérins soutenant directement ou indirectement ladite troisième surface de contact dudit premier collier, les dits corps de vérins étant reliés entre eux de manière à ce que des échanges de fluide puissent intervenir entre eux pour créer une translation différentiée desdites tiges des différents vérins lorsque un appui non uniforme s'exerce sur les dites extrémités de tiges de vérins.

Dans un troisième mode de réalisation, ladite pièce support de révolution et ledit moyen de transfert de charge par articulation en rotation comprennent une rotule mécanique constituée de 2 pièces rigides dont une pièce inférieure de révolution reposant sur ladite plateforme et une pièce supérieure de révolution, ledit premier collier venant en appui directement ou indirectement sur ladite pièce supérieure, la dite pièce inférieure présentant une surface supérieure de contact de section sphérique concave coopérant en glissement avec une surface convexe complémentaire de section sphérique constituant la surface inférieure de ladite pièce supérieure de ladite pièce support, l'une au moins desdites surfaces concave et convexe comprenant un revêtement anti friction, de préférence un revêtement de polymère.

On comprend que l'axe de révolution de la dite pièce supérieure de révolution correspond à l'axe des dites première pièce forgée, premier collier et dites première et deuxième surfaces de contact et l'axe de la dite pièce inférieure de révolution reposant sur ladite plateforme correspond à l'axe dudit cône d'angle au sommet 2α.

On comprend que :
- lesdites surfaces concaves et convexes sphériques sont centrées en un même point au-dessus de l'extrémité supérieure de la conduite ou du dispositif de retenue et maintien selon l'invention sur le même axe de révolution que celui de l'extrémité supérieure de la conduite et dudit dispositif et autorisent de glissement relatif lesdites surfaces complémentaires coopérant ainsi en rotation l'une par rapport à l'autre par glissement de sorte que l'inclinaison de ladite conduite reste dans un cône d'angle au sommet inférieur à 10°, de préférence inférieur à 5°, et
- ladite troisième surface de contact dudit premier collier vient en appui directement ou indirectement sur ladite pièce supérieure.

On comprend que lesdits moyens d'articulation en rotation décrits ci-dessus permettent que les transferts de charge se répartissent sensiblement isostatiquement sur toute la périphérie desdites surfaces de contact lorsqu'un déséquilibre de charge résultant d'une inclinaison de la conduite se produit.

On préfère toutefois pour des raisons de facilité de fabrication et/ou de mise en place sur le support flottant, un moyen d'articulation flexible de type élastique à butée lamifiée ou de préférence, un moyen d'articulation en rotation de type hydraulique avec des vérins tels que décrits ci-dessus.

On préfère utiliser un moyen d'articulation de type hydraulique car, dans ce mode de réalisation, il n'est pas nécessaire de mettre en oeuvre une dite pièce support sur le support flottant, indépendante dudit moyen d'articulation en rotation, ledit moyen de support incluant les vérins hydrauliques est donc plus facile à mettre en place et le cas échéant, retirer du support flottant.

On comprend que les tiges de vérins sont disposées sensiblement parallèlement audit axe de révolution du dispositif selon l'invention et perpendiculairement à ladite plateforme, et la longueur des tiges de vérins peut être relativement faible, notamment inférieure à 10cm, de préférence inférieure à 5cm, compte tenu des faibles écarts angulaires autorisés.

Dans un mode préféré de réalisation, lesdites première et deuxième surfaces de contact sont des surfaces de révolution tronconiques inclinées par rapport à l'axe Z₁Z'₁ de ladite première pièce forgée, de préférence d'un angle β de 30 à 60°, de préférence encore d'environ 45°.

On comprend que lesdites première et deuxième surfaces de contact tronconiques sont inscrites dans un cône d'angle au sommet situé à l'extrémité inférieure dudit cône, c'est-à-dire dessous lesdites première et deuxième surfaces de contact

De préférence encore, ladite troisième surface de contact dudit premier collier est une surface de révolution tronconique, de préférence sensiblement de même inclinaison que lesdites première et deuxième surfaces de contact tronconiques.

Dans un autre mode préféré de réalisation, ledit premier collier coopère indirectement avec ledit moyen de support par l'intermédiaire d'un deuxième collier verrouillé de façon amovible autour de la surface externe d'une partie dudit premier collier incluant ladite troisième surface de contact, ledit deuxième collier comprenant une quatrième surface de contact de révolution sur laquelle ladite troisième surface de contact dudit premier collier est en appui, ledit deuxième collier présentant de préférence un diamètre externe maximal et un diamètre interne de passage plus grands que le diamètre externe maximal et respectivement diamètre interne de passage dudit premier collier, ledit deuxième collier présentant en partie inférieure une cinquième surface de contact de révolution coopérant directement ou indirectement en appui sur une sixième surface de contact de révolution en partie supérieure dudit moyen de support.

Plus particulièrement, le diamètre du premier orifice de passage de la conduite à travers ladite pièce support correspond sensiblement au diamètre du deuxième orifice de passage sur ladite plateforme et est de préférence supérieur au diamètre interne dudit deuxième collier.

De préférence, le diamètre interne de passage dudit deuxième collier est supérieur au diamètre externe de ladite première protubérance, de sorte que le cas échéant, ladite conduite peut être descendue après raccordement en retirant seulement ledit premier collier, sans déverrouiller et retirer ledit deuxième collier en appui sur ladite pièce de support.

On comprend que lesdites surfaces de contact de révolution sont des surfaces s'étendant sur toute la périphérie de la surface externe des pièces ou colliers concernés.

Avantageusement encore, le dispositif selon l'invention comprend un troisième collier verrouillé autour d'une partie inférieure au moins d'un dit deuxième collier, ledit troisième collier comprenant une septième surface de contact de révolution supérieure sur laquelle vient en appui ladite cinquième surface de contact dudit deuxième collier et une huitième surface de contact de révolution inférieure venant directement en appui contre ladite sixième surface de contact en partie supérieure dudit moyen de support, de préférence ledit troisième collier présentant un diamètre externe maximal et un diamètre interne de passage plus grands que le diamètre externe maximal et respectivement le diamètre interne de passage dudit deuxième collier.

On comprend que :
- les dits deuxième et troisième colliers et quatrième à huitième surfaces de contact comprennent le même axe de révolution correspondant à l'axe de ladite extrémité supérieure de conduite, et
- ledit moyen de transfert de charge et d'articulation en rotation permet une articulation libre en rotation de l'axe des dites première pièce forgée, premier collier et dites première, deuxième et troisième surfaces de contact dans la limite dudit cône d'angle au sommet 2α par rapport à l'axe ZZ' perpendiculaire à ladite plateforme.

La mise en oeuvre de ces différents colliers de diamètres croissants s'accompagne de mise en oeuvre desdites première, deuxième, troisième, quatrième, cinquième, septième, huitième et sixième surfaces de contact dites surfaces de contact de révolution de superficies croissantes, ce qui permet de limiter les démontages des colliers nécessaires en fonction du diamètre de passage requis. En effet, ces éléments démontables doivent supporter des charges considérables de plusieurs milliers de tonnes, ce qui nécessite des éléments extrêmement massifs et difficiles à manipuler. Plus le diamètre de passage est important par rapport au diamètre extérieur du Pipe, plus les efforts de flexion au sein desdits colliers démontables sont importants, ce qui nécessite des renforcements considérables. En procédant ainsi avec des colliers multiples, si l'on doit seulement passer la conduite, le premier collier aura un diamètre de passage légèrement supérieur à celui de la protubérance, ce qui nécessite des premiers colliers de taille raisonnable que l'on enlèvera et remettra à chacun des cycles d'assemblage d'une rame supplémentaire. Si l'on doit installer une protection d'isolation autour de la conduite, dans la zone d'assemblage, le diamètre de passage requis sera de plus grande ampleur et nécessitera alors le démontage-remontage des premier et deuxième colliers à chacun des cycles d'assemblage. Si enfin, on doit passer des pièces encombrantes, telles des connecteurs automatiques ou des têtes de traction, on démontera l'ensemble des colliers pour assurer un passage intégral. Ce dernier collier étant extrêmement massif et lourd, ne sera ainsi démonté qu'en d'exceptionnelles occasions.

De préférence, toutes lesdites surfaces de contact comportent au moins une partie de même forme tronconique, c'est-à-dire selon un cône de même demi angle au sommet, de préférence 30 à 60°, de préférence encore environ 45°.

Avantageusement encore, lesdits premier, deuxième et, le cas échéant troisième colliers sont constitués de plusieurs parties formant des sections angulaires de collier(s) circulaire(s), lesdites parties ou sections angulaires de colliers étant verrouillées entre elles de façon amovible ou de préférence seulement deux parties adjacentes étant verrouillées entre elles, les autres parties étant articulées entre elles à chaque extrémité de manière à pouvoir ouvrir ledit collier après déverrouillage de façon amovible.

Ce mode de réalisation permet de faciliter la mise en place et le retrait desdits colliers.

Le dispositif de retenue et maintien selon l'invention est particulièrement avantageux lorsque ladite conduite est un ensemble de conduites coaxiales du type PiP et ladite première pièce forgée est une pièce de jonction à l'extrémité d'une partie de l'ensemble de conduites coaxiales à assembler, ladite pièce de jonction comprenant des branches de révolution externes et internes délimitant deux cavités annulaires, dont des premières branches externe et interne sont soudées respectivement aux extrémités dites conduites externe et interne de ladite partie dudit ensemble de deux conduites coaxiales, ladite première protubérance étant formée sur la surface externe d'une zone de pleine épaisseur entre les deux cavités annulaires, et de préférence ladite première branche interne étant plus longue que ladite première branche externe.

Cette dernière caractéristique permet de faciliter la réalisation de soudage à des cordons de soudage externe aux extrémités des 2 dites conduites interne et externe.

La présente invention fournit également un support flottant comprenant un dispositif pour le raccordement et la pose de parties successives d'une conduite sous-marine depuis ledit support flottant, de préférence à l'aide d'une tour de pose en J, caractérisé en ce la dite plateforme sur laquelle repose ledit moyen de support est située en partie basse de ladite tour perpendiculairement à l'axe de la dite tour et le dit moyen de transfert de charges et d'articulation en rotation autorise une dite inclinaison dans un dit cône d'axe correspond à l'axe de la dite tour.

On comprend que :
- ladite deuxième partie de conduite est disposée au-dessus de ladite première partie de conduite, et
- le dispositif de retenue et maintien selon la présente invention est ouvert ou relâché pour permettre l'immersion complète de ladite conduite sous-marine après ledit assemblage desdites première et deuxième parties de conduite, de préférence par soudage.

La présente invention a également pour objet un procédé de retenue et maintien d'une conduite sur un support selon l'invention, caractérisé en ce qu'on réalise les étapes dans lesquelles :
a) on soude à l'extrémité supérieure de ladite conduite une dite pièce forgée comprenant une dite première protubérance, et
b) on verrouille un dit premier collier en appui contre ladite première surface de contact de ladite première protubérance, et
c) on met en place le cas échéant, desdits troisième et deuxième colliers verrouillés et en appui contre un dit moyen de support solidaire d'une dite plateforme en partie basse de ladite tour de pose en J, et
d) on descend une première partie de conduite comportant une dite première pièce forgée avec une dite première protubérance à l'extrémité supérieure de ladite première partie de conduite, à l'aide de dits bras de préhension jusqu'à venir en appui sur ledit moyen de support ou, le cas échéant, sur lesdits deuxième ou troisième colliers, un dit premier collier étant verrouillé contre ladite première protubérance, lesdits bras de préhension retenant ledit premier collier, de préférence en sous-face d'une dite deuxième protubérance.

La présente invention a enfin pour objet un procédé de raccordement de 2 parties de conduite et pose en mer de la conduite ainsi raccordée à partir d'un support flottant comprenant une tour de pose en J selon l'invention caractérisé en ce qu' on réalise les étapes suivantes dans lesquelles :
1- on met en place le cas échéant desdits troisième et deuxième colliers verrouillés et en appui contre une dite pièce support solidaire d'une dite plateforme en partie basse de ladite tour de pose en J,
2- on descend une première partie de conduite comportant une dite première pièce forgée avec une dite première protubérance à l'extrémité supérieure de ladite première-partie de conduite, à l'aide de dits bras de préhension jusqu'à venir en appui sur ledit moyen de support ou le cas échéant lesdits deuxième ou troisième collier, un dit premier collier étant verrouillé contre ladite première protubérance, lesdits bras de manutention retenant ledit premier collier de préférence en sous face d'une dite deuxième protubérance le cas échéant, et
3- on descend une deuxième partie de conduite comportant une dite première pièce forgée avec une dite première protubérance à son extrémité supérieure à l'aide desdits bras de manutention coopérant avec ledit premier collier verrouillé autour de ladite première pièce forgée, jusqu'à positionner l'extrémité inférieure de ladite deuxième partie de conduite comportant de préférence une deuxième pièce de jonction forgée avec ou sans dite première protubérance, mise bout à bout avec l'extrémité supérieure de ladite première pièce forgée à l'extrémité supérieure de ladite première partie de conduite, et
4- on réalise le raccordement de préférence par soudage desdites première et deuxième pièces forgées, et
5- on relève quelque peu la conduite raccordée à l'aide desdits bras de préhension et on déverrouille et retire ledit premier collier au moins et
6- on descend la conduite raccordée en mer à travers les orifices de premier et deuxième orifices de passage dudit moyen de support et respectivement dite plateforme.

D'autres aspects, caractéristiques et avantages de la présente invention ressortiront mieux à la lumière de la description détaillée qui va suivre, faite de manière illustrative et non limitative en référence aux dessins sur lesquels :
- la figure 1A représente un navire de pose de rames équipé d'une tour de pose en J ;
- la figure 1B représente en vue de côté une conduite descendant jusqu'au fond de la mer et maintenue en tension au sein de ladite tour de pose en J par le dispositif selon l'invention, non représenté, et une rame maintenue dans la partie supérieure de ladite tour de pose en J, ladite rame étant approchée de ladite conduite en suspension, en vue d'être assemblée par soudage ;
- la figure 1C représente en vue de côté les deux portions de conduite en cours de soudage,
- la figure 2 représente le détail de la dite première pièce forgée avec sa dite première protubérance;
- la figure 3 représente une vue de côté d'une variante du dispositif de retenue et maintien selon l'invention comportant des butées lamifiées et un premier et deuxième colliers ;
- la figure 3A représente une vue de dessous du dispositif de la figure 3 ;
- la figure 3B représente le premier collier ouvert, déverrouillé ;
- la figure 3C représente une vue de côté d'une deuxième variante du dispositif de retenue et maintien selon l'invention comportant des butées lamifiées et un premier, deuxième et troisième colliers ;
- la figure 3D représente en coupe et vue de coté le détail de la dite première pièce forgée avec sa dite première protubérance coopérant avec des dits premier et deuxième colliers ;
- les figures 4A-4B sont des vues de côté d'une variante du dispositif selon l'invention comportant une rotule mécanique sphérique, ledit dispositif étant représenté respectivement dans l'axe, et avec une inclinaison d'angle α ;
- la figure 5 est une vue de côté d'une variante du dispositif selon l'invention comportant des vérins hydrauliques couplés entre eux.
- la figure 5A est une vue de dessous du dispositif de la figure 5 ;
- les figures 6A-6E sont des vues de côté d'une séquence d'assemblage d'une nouvelle rame à la conduite déjà posée et maintenue au sein de la tour de pose en J au moyen du dispositif selon l'invention.

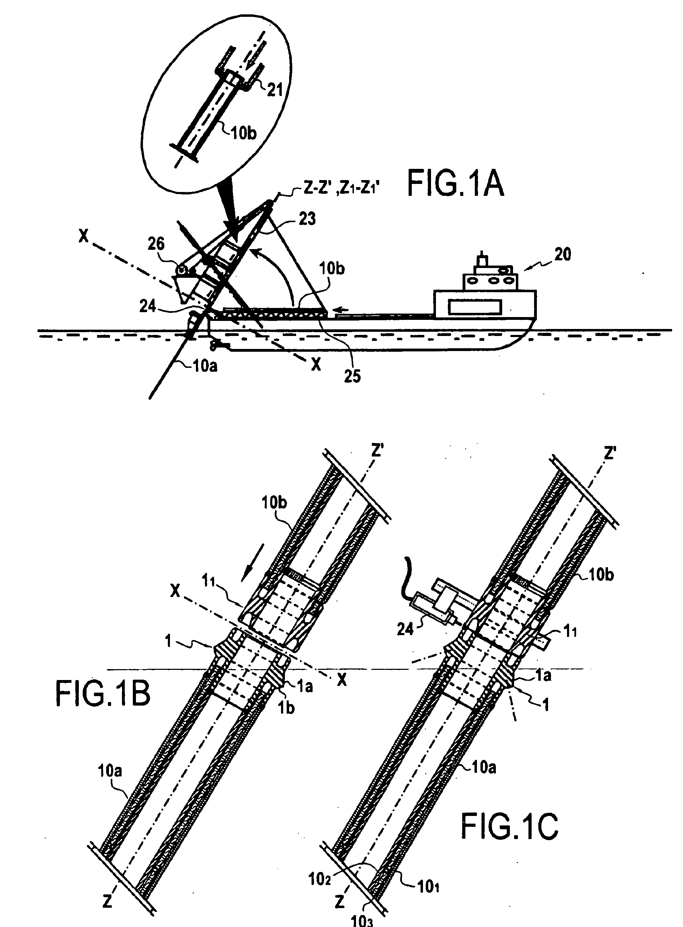

La figure 1A est une vue de côté d'un navire de pose 20 équipé d'une tour de pose en J 23 d'inclinaison variable autour de son axe de rotation en partie basse de la tour 24. Ce navire 20 permet la pose d'une conduite constituée de tronçons de conduite rame assemblés et posés de proche en proche, chaque rame étant elle-même constituée de plusieurs éléments unitaires de conduite soudés entre eux en général à terre, le soudage des rames entre elles se faisant au niveau du navire de pose comme il sera expliqué ci-après.

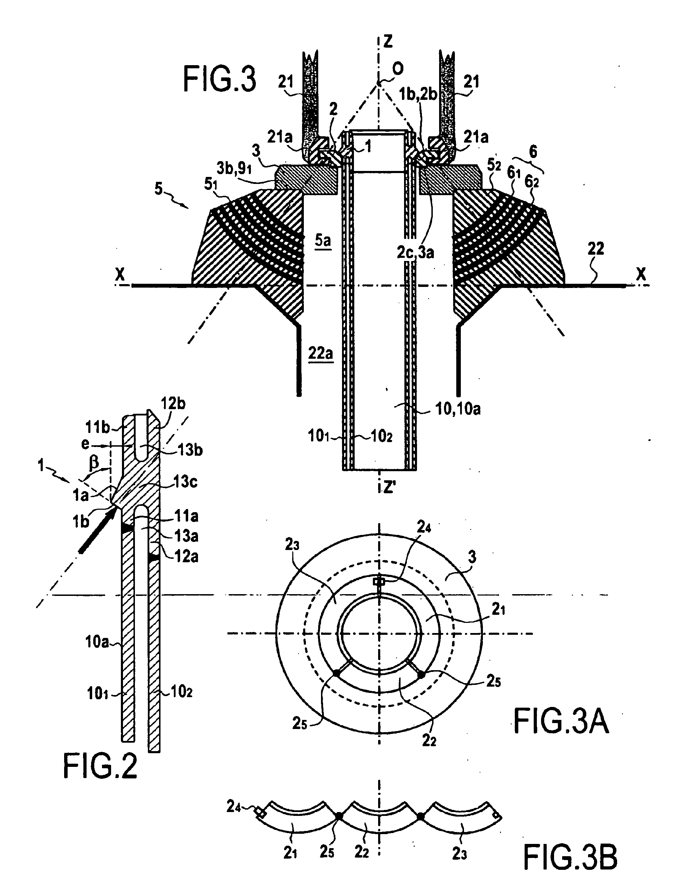

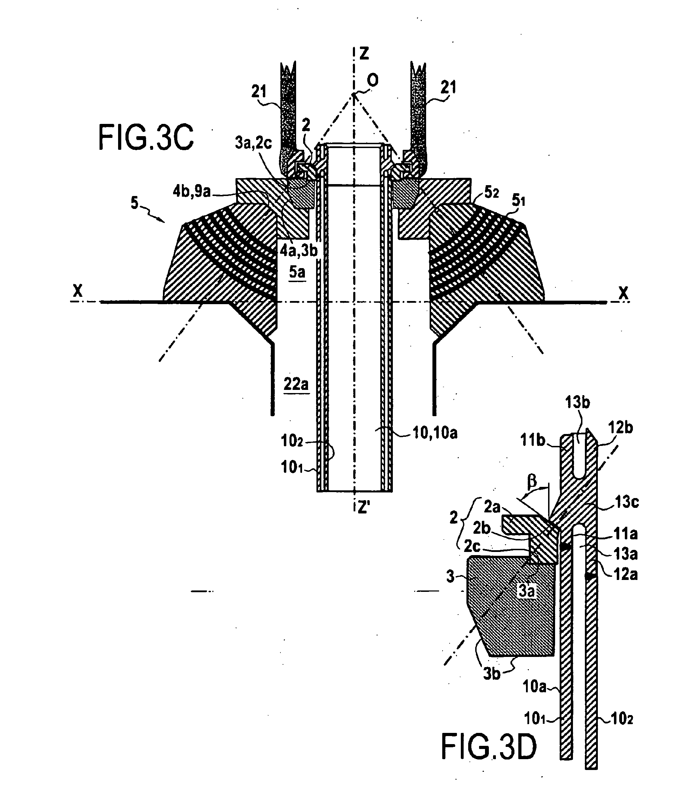

La tour de pose en J comporte dans sa partie basse 24 au niveau du poste de soudage un dispositif de retenue et de maintien selon l'invention, dont plusieurs variantes sont représentées sur les figures 3, 3C, 4A et 5.

Sur la figure 1A on a représenté une partie de conduite sous-marine 10a assurant la liaison entre le navire de pose et le fond de la mer dont l'extrémité supérieure émergée est maintenue fermement à la base de la tour de pose en J à l'aide d'un dispositif de retenue et de maintien selon l'invention.

Une rame additionnelle 10b à assembler à l'extrémité supérieure de la partie conduite sous-marine 10a en suspension pour sa pose ultérieure, repose tout d'abord sur le pont du navire. La rame 10b comprenant 2 à 4 éléments unitaires de conduite assemblés par soudage les uns aux autres et représentant une longueur de 24 à 48m. Une poutre de relevage 25 est apte à supporter et relever ladite rame depuis sa position sensiblement horizontale jusqu'au niveau d'inclinaison de la tour au sein de laquelle elle est transférée. Au sommet de la tour, la rame d'extrémité supérieure 10b équipée d'une dite première pièce de jonction la décrite ci-après, est appréhendée par un dispositif de préhension 22 permettant de déplacer la rame en translation dans la direction axiale longitudinale ZZ' de la tour jusqu'à ce qu'une autre ou deuxième pièce de jonction forgée 1₁ à l'autre extrémité de la rame 10b vienne se présenter en face d'une dite première pièce de jonction forgée 1, l'extrémité supérieure immergée de la partie de conduite 10a étant maintenue en suspension selon une courbe en forme de chaînette jusqu'à son point de contact avec le fond de la mer.

Comme représenté sur les figures 1B et 1C, ladite deuxième pièce de jonction forgée 1₁ à l'extrémité inférieure de la rame 10b est soudée à ladite première pièce de jonction forgée 1 à l'extrémité supérieure de la partie de conduite 10a au niveau du plan d'assemblage XX et d'un poste à soudage 24 en partie basse de la tour de pose en J. La tension de l'extrémité supérieure de la conduite est reprise au moyen d'un treuil 26 relié au préhenseur 22, le dispositif de retenue et de maintien selon l'invention peut être relâché pour libérer la conduite dont l'extrémité supérieure correspondant à l'extrémité supérieure de la rame 10b est alors descendue à son tour jusqu'au plan d'assemblage pour l'assemblage d'une rame supplémentaire éventuelle, le dispositif de retenue et de maintien selon l'invention étant alors réactivé pour soutenir la conduite et effectuer un cycle suivant de raccordement.

Dans les figures 1B et 1C, on a représenté une rame 10b et partie de conduite 10a d'une conduite de type PiP constituée d'une conduite interne 10₂ et conduite externe 10₁ solidarisées à une dite première pièce de jonction 1, ladite conduite 10a et deuxième pièce de jonction forgée 1₁ à l'extrémité inférieure de la rame, l'espace annulaire entre lesdites conduites interne et externe étant rempli d'un matériau isolant 10₃.

De façon connue et tel que décrit dans FR 2873427, et tel que représenté sur les figures 1B, 1C et 2, lesdites première et deuxième pièces de jonction 1 et 1₁ sont délimitées comme suit :
dans une direction radiale par rapport à un axe longitudinal ZZ' de révolution de ladite pièce, lesdites pièces sont délimitées par une paroi interne cylindrique sensiblement de même diamètre que celui de la partie courante de ladite conduite interne 10₂, et par une paroi externe cylindrique de diamètre sensiblement égal au diamètre externe de la partie courante de ladite conduite externe 10₁, et
dans la direction axiale longitudinale ZZ',
   - du côté de ladite pièce de jonction assemblée à l'extrémité desdites conduites externe et interne d'un dit élément d'un ensemble d'au moins deux conduites coaxiales, lesdites parois externe et interne de ladite pièce de jonction forment en section longitudinale des premières branches respectivement externe 11a et interne 12a sensiblement de même épaisseur que lesdites conduites externe 3 et interne 2 auxquelles elles sont destinées à être assemblées, lesdites premières branches externe 11a et interne 12a délimitant une première cavité annulaire 13a, et
   - du côté opposé de ladite pièce de jonction assemblée à l'autre dite pièce de jonction, elle-même assemblée à l'extrémité d'un autre élément d'ensemble de deux conduites coaxiales, lesdites parois externe et interne forment en section longitudinale des deuxièmes branches respectivement externe 11b et interne 12b, délimitant une deuxième cavité annulaire 13b,
   - les fonds desdites première et deuxième cavités 13a,13b étant espacés dans ladite direction longitudinale ZZ', de manière à délimiter une zone pleine 13c de ladite pièce de jonction dans laquelle lesdites parois externe et interne forment les faces externe et interne d'une même paroi cylindrique.

Comme montré sur la figure 2, ladite première pièce forgée 1 comporte au niveau de sa zone pleine 13c une première protubérance la d'épaisseur (e) 10 à 50mm, de préférence de 15 à 25mm, correspondant à une augmentation de diamètre de la surface de ladite pièce forgée par rapport à sa partie courante cylindrique d'environ 20 à 100mm, de préférence de 30 à 50mm

La figure 3 représente en coupe et en vue de côté un dispositif de retenue et maintien selon l'invention d'une conduite en suspension, le dispositif de retenu et de maintien comprenant un moyen d'articulation flexible de type rotule à butée lamifiée sphérique, dont le but est de libérer les rotations de l'axe Z₁Z'₁ de l'extrémité supérieure de la conduite par rapport à l'axe ZZ' de la tour, grâce à l'élasticité des couches d'élastomère 6₁ de ladite rotule à butée lamifiée sphérique.

Plus précisément, dans cette première variante de réalisation d'un dispositif de retenue et de maintien selon l'invention, une pièce support 5 ou sabot de base, présentant une forme de révolution avec un orifice central d'un premier passage 5a, correspond sensiblement au diamètre de l'orifice de passage dit deuxième passage 22a d'une plateforme 22 sur laquelle ladite pièce support 5 repose. Ladite plate-forme 22 est disposée perpendiculairement par rapport à l'axe ZZ' de la tour. Ces dits premier 5a et deuxième 22a passages sont destinés à être traversés par la conduite 10 maintenue en suspension par le dispositif de retenue et maintien selon l'invention. La pièce support 5 incorpore un moyen d'articulation en rotation flexible 5₁ constitué par une butée lamifiée 6 comprenant un empilement de couches élastomère 6₁ séparées par des tôles rigides 6₂, de préférence en acier, leur forme étant de préférence sphérique de centre O, situé sur l'axe ZZ' de la tour lorsque ledit moyen d'articulation flexible est au repos. La butée lamifiée 6 est surmontée d'une partie supérieure 5₂ de ladite pièce support, dont la face externe supérieure comprend une dite sixième surface de contact de révolution 9a de forme annulaire plane, ou surface d'appui sur laquelle repose une dite cinquième surface de contact de révolution 3b également de forme annulaire plane, en sous face d'un deuxième collier 3. La surface supérieure du deuxième collier 3 sert d'appui à un premier collier 2. Le deuxième collier 3 est verrouillé de façon amovible autour de la surface externe d'une partie inférieure dudit premier collier 2, incluant une troisième surface de contact 2c en sous face dudit premier collier 2 venant en appui sur ladite quatrième surface de contact de révolution annulaire plane 3a de la surface externe supérieure dudit deuxième collier.

La conduite 10 comporte à son extrémité supérieure une première pièce de jonction forgée 1 telle que décrite ci-dessus, comportant sur sa surface externe une première protubérance 1a périphérique prenant en sous face une première surface de contact de révolution 1b de forme tronconique correspondant à une inclinaison par rapport à l'axe Z₁Z'₁ de la pièce forgée d'un angle β de 30 à 60° de préférence environ 45°, ladite surface tronconique étant évasée vers le haut, c'est-à-dire avec un sommet virtuel de cône situé dessous ladite surface tronconique. Ledit premier collier 2 est verrouillé de façon amovible autour et contre ladite première protubérance radiale 1a de ladite première pièce forgée de révolution. Plus précisément, ledit premier collier 2 comprenant sur sa surface tournée vers son orifice central une deuxième surface 2b de contact de révolution de même forme tronconique que ladite première surface de contact 1b sur laquelle elle vient en appui. Ledit deuxième collier 2 comprend une deuxième protubérance 2a formant une échancrure avec la surface supérieure du deuxième collier 3 sur laquelle repose ledit premier collier 2, échancrure dans laquelle les extrémités 21a d'un bras de préhenseur 21 peuvent venir se loger en sous face dudit premier collier 2 de façon à assurer la retenue de ladite extrémité supérieure de conduite lorsque celle-ci est descendue selon l'axe ZZ' jusqu'à venir en appui sur ledit deuxième collier3.

La butée lamifiée sphérique 6 autorise des rotations par flexion de sa partie supérieure 5₂ et donc de la conduite 10 lorsque celle-ci repose en appui et en suspension par l'intermédiaire desdits premier collier 2 et deuxième collier 3 sur la partie supérieure 5₂ de ladite pièce support 5, ces rotations correspondant à des inclinaisons de la conduite dans un cône virtuel d'angle au sommet 2α inférieur à 10°, de préférence inférieur à 5° par rapport à l'axe ZZ' de la tour.

Sur les figures 3A et 3B, on a représenté les différentes parties de 2₁, 2₂ et 2₃ dudit deuxième collier 2 formant des sections angulaires de collier circulaire, avec une partie médiane 2₂ reliée par une articulation 25 à des parties d'extrémité 2₁ et 2₃, lesdites parties d'extrémité 2₁ et 2₃ étant reliées entre elles par des moyens de verrouillage 2₄.

Ces moyens d'articulation 2₅ et de verrouillage 2₄ permettent la pose et le verrouillage du collier sur lui-même et son ouverture et retrait le cas échéant, comme explicité plus loin.

Les figures 3A et 3B montrent le détail de réalisation d'un premier collier 2, mais le deuxième collier 3 et les autres colliers décrits ci-après sont réalisés également selon le même principe en plusieurs parties articulées entre elles angulairement.

Lesdits premier et deuxième colliers à orifice central circulaire peuvent également être qualifiés de « brides de révolution », compte tenu du fait que les différents colliers sont verrouillés les uns contre les autres.

Sur les figures 3C et 3D, on a représenté une seconde variante de la réalisation d'un dispositif de retenue et de maintien selon l'invention avec une pièce support 5 comportant une butée lamifiée. Dans cette seconde variante de réalisation, un troisième collier 4 est mis en oeuvre. Ce troisième collier 4 est verrouillé autour d'une partie inférieure d'un dit deuxième collier intermédiaire 2. Le deuxième collier intermédiaire 2 comprend desdites quatrièmes surfaces de contact de révolution 3a sur laquelle ladite troisième surface de contact 2c en sous face dudit premier collier vient en appui, et ledit collier présente en partie inférieure une dite cinquième surface de contact de révolution 3b, laquelle ne coopère plus cette fois-ci directement avec ladite sixième surface de contact de révolution 9a en partie supérieure de la pièce support 5, mais coopère avec une septième surface de contact de révolution supérieure 4a sur laquelle vient en appui ladite cinquième surface de contact- 3b dudit deuxième collier. Ledit troisième collier comprend en sous face une huitième surface de contact de révolution 4b reposant directement en appui contre ladite sixième surface de contact 9a en partie supérieure de la pièce support 5.

Sur la figure 3C, lesdites cinquième surface de contact 3b en sous face du deuxième collier 2, septième surface de contact 4a en partie supérieure du troisième collier 3, huitième surface de contact 4b en sous face du troisième collier 3 et sixième surface de contact 9a en partie supérieure de la pièce support rigide 5 comprennent chacune une partie médiane de forme tronconique d'inclinaison non identique. Lesdites cinquième surface de contact 3b en sous face du deuxième collier et septième surface de contact 4a du troisième collier 4 présentent des parties annulaires planes côté conduite et des parties externes cylindriques verticales côté opposé extérieur. Inversement, lesdites cinquième surface de révolution 3b en sous face du deuxième collier 3 et sixième surface de contact 9a en partie supérieure de la pièce rigide 5 présentent une partie de forme cylindrique verticale 9₁ du côté de la conduite interne et une partie de forme annulaire plane 9₂ du côté opposé extérieur.

Ledit premier collier 2 présente un diamètre interne légèrement supérieur au diamètre externe de la partie courante de ladite première pièce forgée 1 en sous face de ladite première protubérance 1a. Ledit troisième collier 4 en sous face dudit deuxième collier 3 présente un diamètre interne supérieur au diamètre interne dudit deuxième collier 3, lui-même supérieur au diamètre interne du premier collier 2. Inversement, le diamètre externe dudit deuxième collier 2 est inférieur au diamètre externe dudit troisième collier. Cet empilement desdits premier, deuxième et troisième colliers présente l'intérêt de n'avoir à démonter-remonter à chaque rame que les colliers correspondant au diamètre de passage requis. Pour le passage de très grosses pièces, tels les connecteurs automatiques ou les terminaisons de pipe-line, le dernier collier, pièce de très forte capacité de résistance en flexion, donc très encombrante et très massive ne sera démontée-remontée qu'occasionnellement, alors que le premier collier, moins encombrant et moins massif pourra être démonté-remonté sans difficultés à chaque cycle d'installation d'une nouvelle rame.

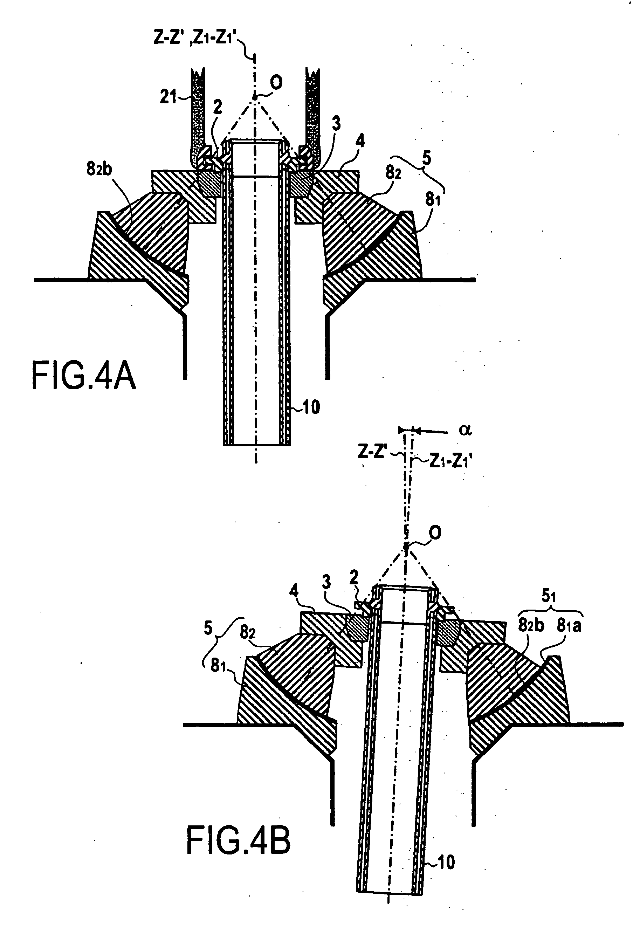

Sur les figures 4A et 4B, on a représenté une troisième variante de réalisation d'un dispositif de retenue et de maintien selon la présente invention du type rotule mécanique.

Cette troisième variante se distingue des variantes précédentes, par la structure de la pièce support 5 qui est formée :
- d'une pièce inférieure ou pièce de base 8₁ reposant sur ladite plateforme et présentant une surface supérieure concave sphérique 8₁a revêtue d'une couche de polymère anti friction, de préférence du Téflon, et
- d'une pièce supérieure 8₂ constituant la partie supérieure de la pièce support 5, présentant une surface inférieure 8₂b de forme convexe sphérique complémentaire de la forme concave sphérique de la surface supérieure 8₁a de la pièce inférieure 8₁, les deux surfaces sphériques concave et convexe étant de même centre O et étant aptes à coopérer en rotation par glissement de ladite partie supérieure 8₂ sur ladite partie inférieure 8₁. En cas de rotation, les inclinaisons de l'axe de révolution de la conduite 10 et de la surface de révolution sphérique convexe inférieure 8₂ sont sensiblement identiques, d'un angle α par rapport à l'axe de révolution de la surface inférieure concave sphérique 8₁ ou axe de révolution dudit deuxième orifice de passage 22a, ou encore axe longitudinal de la conduite 10 lorsque celle-ci est au repos en appui sur ladite plateforme 22.

On entend ici par surface de forme sphérique centrée en O une surface s'inscrivant dans une enveloppe sphérique d'une même sphère de centre O placée au-dessus desdites surfaces. On comprend en effet que lesdites surfaces sphériques concave et convexe sont à concavité tournée vers le haut et respectivement convexité tournée vers le bas.

L'articulation en rotation à butée lamifiée ou à rotule mécanique telle que décrite ci-dessus d'un dispositif de retenue et maintien selon l'invention, permet de transférer à la structure porteuse que constitue la plateforme 22 à la base de la tour de pose en J 23 tous les efforts résultant d'un écartement angulaire de la conduite d'un angle α comme représenté sur la figure 4B, et ce sans créer de contrainte de flexion au niveau du plan XY perpendiculaire à l'axe ZZ' de la tour, au niveau de ladite première surface de contact de révolution tronconique qui constitue ainsi un appui isostatique en cas de variation angulaire de la conduite.

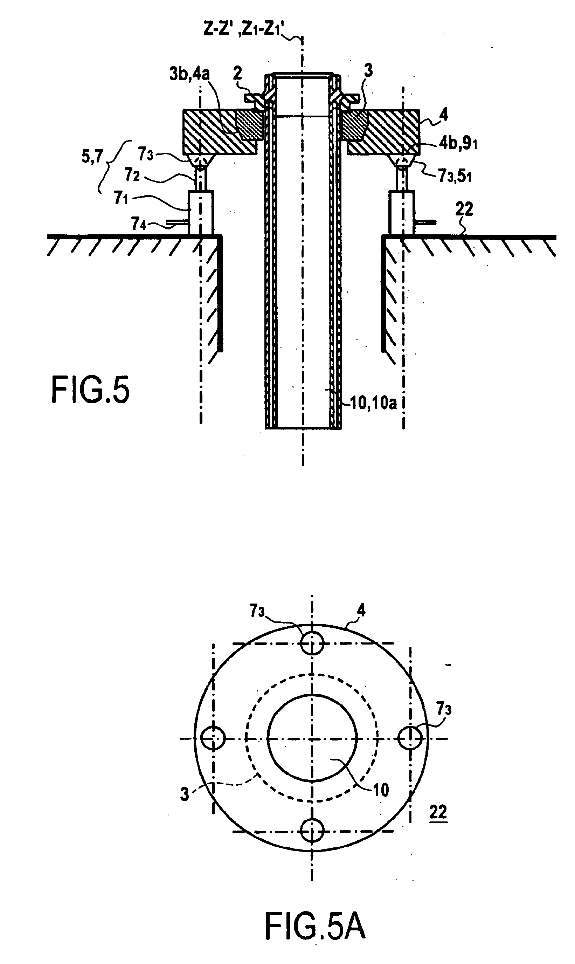

Sur les figures 5 et 5A, on a représenté une quatrième variante de réalisation d'un dispositif de retenue et de maintien selon l'invention, qui se distingue des précédentes en ce que le moyen de support 5 comporte un moyen d'articulation en rotation 5₁ de type hydraulique.

Plus particulièrement, le moyen de support 5 est constitué d'une pluralité de vérins hydrauliques, en l'espèce tel que représenté sur la figure 5A, 4 vérins hydrauliques 7 répartis à 90° autour dudit deuxième orifice de passage 22a de la plateforme 22 à travers lequel passe la conduite 10. Plus particulièrement, les corps de vérin 7₁ reposent sur ladite plateforme 22 autour dudit deuxième orifice de passage 22a et les tiges ou pistons 7₂ desdits vérins disposés sensiblement parallèlement à l'axe ZZ' de la tour de retenue et de maintien selon l'invention, dite conduite au repos dont les extrémités soutiennent lesdites huitièmes surfaces de contact de révolution inférieure 4b en sous face dudit troisième collier 4. Dans ce cas, les extrémités supérieures desdites petites rotules d'articulation 7₃ constituent ladite sixième surface de contact 9₁ en partie supérieure du moyen de support 5.

Lesdits vérins ont de préférence une section de piston identique et sont alors disposés à une distance constante de l'axe ZZ', de manière à ce que le moment de la force exercé par chacun des vérins par rapport à l'axe ZZ' soit constant. De la même manière, on peut éloigner l'un des vérins de l'axe ZZ', mais sa section de piston devra être réduite proportionnellement de manière à conserver le même moment de la force exercée par rapport à l'axe ZZ' : Il conviendra alors d'augmenter proportionnellement la course dudit vérin, donc la longueur de sa tige, pour qu'il permette les rotations de l'ensemble dans ledit cône d'angle α.

Les différents corps de vérin 7₁ sont reliés entre eux 7₄ de manière à ce que les échanges d'huile puissent avoir lieu dès qu'un déséquilibre de charge apparaît sur l'un d'entre eux. Ainsi, dès que se produit une inclinaison de la conduite d'un angle α tel que décrit en référence à la figure 4B, le vérin de droite s'enfonce et chasse l'huile vers les autres vérins, de sorte que la charge reste uniformément répartie sur la périphérie de la surface d'appui dite première surface de contact 1b en sous face de la première protubérance, quelles que soient les variations angulaires de l'angle α. Ainsi, les vérins ne sont raccordés à aucune centrale hydraulique mais communiquent tous entre eux par des conduites 7₄ assurant ainsi le libre transfert de l'huile et permettant d'assurer au dispositif de retenue et de maintien selon l'invention une fonction d'appui isostatique.

Le remplissage initial des corps de vérins en fluide hydraulique est tel que lorsque l'axe Z₁Z'₁ de la conduite coïncide avec l'axe ZZ', l'ensemble des tiges des vérins sont à mi-course. Les longueurs de tige de chacun des vérins est telle que pour une variation maximale positive de l'angle α (vers la droite), le vérin de droite se trouve en butée basse et le vérin de gauche se trouve en butée haute. De même, pour une variation maximale négative de l'angle α (vers la gauche), le vérin de droite se trouve en butée haute et le vérin de gauche se trouve en butée basse. On limite avantageusement la longueur des tiges des vérins de manière à limiter la rotation de la conduite dans un cône d'angle au sommet 2α inférieur à 10°, de préférence inférieur à 5°.

Dans les différentes variantes de réalisation du moyen d'articulation en rotation 5₁, celui-ci a toujours un effet d'auto centrage de la conduite.

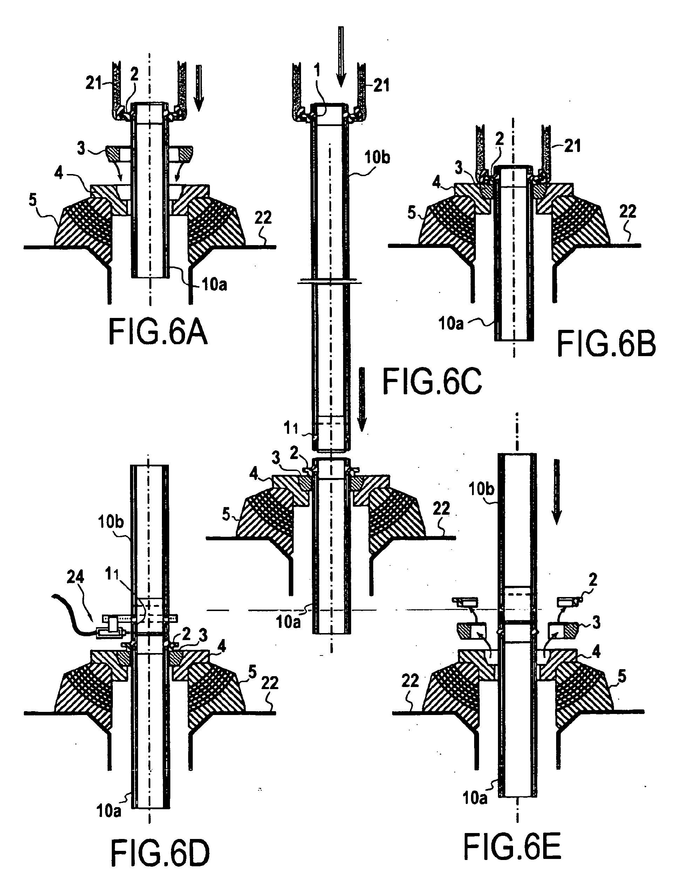

Sur les figures 6A à 6E, on a représenté en coupe et en vue de côté les différentes étapes de mise en place d'un dispositif de retenue et de maintien selon l'invention. Sur la figure 6A, une première partie de conduite 10a est descendue au moyen de bras de préhension 21 depuis le haut de la tour de pose en J 23. Pour ce faire, ladite première pièce forgée 1 à l'extrémité supérieure de la première partie de conduite 10a coopère avec un dit premier collier 2 au niveau de ladite première protubérance 1a, de sorte que les extrémités 21a desdits bras de préhension 21 peuvent venir crocheter et retenir ladite deuxième protubérance 2a dudit deuxième collier 2, et ainsi descendre la partie de conduite 10a. On comprend que ledit premier collier 2 est verrouillé sur lui-même de façon à ce que ladite première surface de contact 1b en sous face de ladite première protubérance vienne en appui contre ledit premier collier au niveau d'une dite deuxième surface de contact 2b supérieure dudit premier collier. Ladite partie de conduite 10a peut être descendue jusqu'à venir jusqu'à ce que ladite troisième surface de contact de révolution 2c en sous face dudit premier collier vienne en appui sur ladite quatrième surface de contact de révolution supérieure 3a dudit deuxième collier 3. Précédemment, ledit deuxième collier ou collier intermédiaire a été verrouillé sur lui-même et descendu en appui sur la surface interne supérieure du troisième collier 4, lui-même reposant sur la partie supérieure d'une pièce support de révolution 5 reposant sur la plateforme 22 comme décrit précédemment. Une fois que la première partie de conduite 10a repose sur la pièce de support 5 par l'intermédiaire desdits premier, deuxième et troisième colliers, tel que représenté sur la figure 6B, les bras de préhension sont libérés et une nouvelle rame ou deuxième partie de conduite 10b équipée à son extrémité supérieure d'une dite première pièce de jonction forgée 1 et à son extrémité inférieure d'une pièce de jonction sans protubérance 1₁ est descendue à nouveau à l'aide des bras 21, puis rapprochée de l'extrémité supérieure de ladite première partie 10a en suspension au niveau du dispositif de retenue et de maintien selon l'invention tel que représenté sur la figure 6C.

Une machine de soudage 24 est alors installée comme illustré sur la figure 6D et la soudure est réalisée. L'ensemble des deux parties de conduite assemblées est alors soulevé de quelques dizaines de centimètres, ce qui permet d'extraire le deuxième collier 3 ou collier intermédiaire puis le collier supérieur ou dit premier collier 1, libérant ainsi le passage pour descendre la conduite vers le fond sur une distance correspondant à la longueur de la rame, pour un nouveau cycle d'assemblage de la rame suivante.

Le diamètre de passage dudit deuxième collier 3 est supérieur au diamètre externe maximal de la conduite, ce qui permet de descendre la conduite sans aucune interférence. En cas de passage de connecteur, d'anode ou de bride à installer sur la périphérie de la conduite, on enlève avantageusement ledit deuxième collier 3 de manière à laisser un passage plus important.

A titre d'exemple, une conduite de type pipe-in-pipe posé par 2200m de profondeur d'eau présente les caractéristiques suivantes. La conduite externe a un diamètre de 403mm et une épaisseur de 23.8 mm, la conduite interne a un diamètre de 254mm et une épaisseur de 27mm, l'espace annulaire de la conduite pipe-in-pipe est de 22mm, ce qui donne à la pièce forgée un écart entre son diamètre externe et son diamètre interne, c'est-à-dire une épaisseur de 72.8mm dans sa partie courante, valeur à laquelle se rajoute l'épaisseur de la protubérance de 20mm. La tension résultante de la chaînette formée par la conduite en suspension en cours de pose est de 1200t environ, ce qui correspond à une contrainte Von Mises résultante dans le plan conique 1b, de 280MPa, ce qui, pour un acier de résistance 450MPa, correspond à un taux de travail de 62% de la limite élastique. Ce taux élevé n'est acceptable du point de vue de la sécurité que grâce à la rotule 5 qui assure une répartition parfaitement uniforme des contraintes sur l'intégralité de la périphérie de la protubérance. Ceci est aussi dû au fait que les faces en contact des pièces forgées ainsi que des divers colliers sont usinées pour assurer un bon transfert de charge et des niveaux de contraintes uniformes : on exclura toute surface de contact brute de forge, ou des usinages de médiocres qualité en termes de géométrie ou d'état de surface.

## Revendications

1. Support flottant (20) comprenant un dispositif de retenue et maintien d'une conduite sous-marine (10) en suspension à partir dudit support flottant et une conduite, la conduite comportant une première pièce forgée de révolution (1) soudée à l'extrémité supérieure de ladite conduite formant une section de conduite tubulaire interne sensiblement de même diamètre que celui de ladite conduite, **caractérisé en ce que** le dit dispositif de retenue et maintien comprend :
a- une dite première pièce forgée comprenant une première protubérance radiale (1a) périphérique sur sa surface externe, ladite première protubérance radiale comprenant en sous face une première surface de contact de révolution (1b),
b- au moins un premier collier (2) verrouillé de façon amovible autour et contre ladite première pièce forgée en sous face de la dite protubérance au niveau de ladite première surface de contact (1b) de ladite première protubérance, ladite première surface de contact coopérant en appui sur une deuxième surface de contact de révolution (2b) du dit premier collier, ledit premier collier formant une deuxième protubérance radiale (2a), de préférence une deuxième protubérance de révolution, de plus grand diamètre que ladite première protubérance, ladite deuxième protubérance étant apte à retenir les extrémités (21a) de bras de préhension (21) installé sur ledit support flottant et permettant de lever ou descendre ladite conduite en translation par rapport audit support flottant sensiblement dans l'axe (Z₁Z'₁) de la dite conduite à son extrémité supérieure, et
c- un moyen de support (5) reposant sur une plateforme fixe (22) traversée dans un premier passage (22a) par la conduite , la dite plateforme étant solidaire dudit support flottant, le dit moyen de support et la dite plateforme entourant ladite conduite et supportant directement ou indirectement ledit premier collier, ledit premier collier présentant une troisième surface de contact de révolution (2c) en sous face dudit premier collier et coopérant en appui directement ou indirectement sur ledit moyen de support, ledit moyen de support (5) comportant un moyen de transfert de charge et d'articulation en rotation (5₁) permettant le guidage de l'inclinaison de l'axe (Z₁Z'₁) de la dite conduite à sa dite extrémité supérieure dans un cône virtuel d'angle au sommet (2α) inférieur à 10°, de préférence inférieur à 5° par rapport à un axe (ZZ') perpendiculaire à la dite plateforme, et assurant une répartition sensiblement uniforme des charges sur toute les dites surfaces de contact (1b,2b) lorsque la dite conduite exerce un appui non uniforme sur les dites surfaces de contact (1b,2b) et ledit moyen de support, provocant une dite inclinaison de la conduite.

2. Support flottant selon la revendication 1, **caractérisé en ce que** ladite première protubérance (1a) présente une épaisseur (e) de 10 à 50 mm, de préférence inférieure à 30 mm, de préférence encore de 15 à 25 mm.

3. Support flottant selon l'une des revendications 1 ou 2, **caractérisé en ce que** ledit moyen d'articulation en rotation est un moyen d'articulation à effet d'auto centrage de la conduite lorsque celle-ci est inclinée par mouvements dudit support flottant (20).

4. Support flottant selon l'une des revendications 1 à 3, **caractérisé en ce que** ledit moyen de support (5) est une pièce de support de révolution solidaire dudit support flottant, reposant sur la dite plateforme (22), la dite pièce support (5) comportant un premier orifice de passage central (5a), de diamètre plus grand que celui de ladite première protubérance, et ledit moyen de transfert de charge et d'articulation en rotation permet une articulation libre en rotation de l'axe des dites première pièce forgée, premier collier et dites surfaces de contact dans la limite dudit cône d'angle au sommet (2α) par rapport à l'axe (ZZ') de la dite pièce de support (5) et du dit premier orifice de passage central (5a).

5. Support flottant selon l'une des revendications 1 à 4, **caractérisé en ce que** ledit moyen de transfert de charges et d'articulation en rotation (5₁) est un moyen d'articulation flexible comprenant une butée lamifiée de révolution (6) comprenant une pluralité de couches élastomère (6₁) intercalées entre des renforts rigides (6₂), de préférence métalliques, définissant au repos des surfaces de révolution de même axe que l'axe de révolution (ZZ') de la dite première pièce forgée (1), dite pièce support (5), et dit premier collier (2).

6. Support flottant selon la revendication 5, **caractérisé en ce que** ledit moyen d'articulation flexible est du type rotule comprenant desdites butées lamifiées sphériques.

7. Support flottant selon l'une des revendications 1 à 3, **caractérisé en ce que** ledit moyen de transfert de charge et d'articulation en rotation (5₁) et ledit moyen de support (5) sont constitués par une pluralité de vérins hydrauliques (7), de préférence au moins 3 vérins hydrauliques régulièrement répartis autour dudit premier passage (22a) de ladite plateforme (22) et de ladite conduite, les corps de vérins (7₁) reposant sur ladite plateforme (22) autour dudit premier passage (22a) à travers lequel passe la conduite (10), et les tiges ou pistons (7₂) desdits vérins comportant de préférence à leurs extrémités des petites rotules d'articulation libre en rotation(7₃), les dites extrémités de tiges de vérins soutenant directement ou indirectement ladite troisième surface de contact (1c) dudit premier collier (2), les dits corps de vérins étant reliés entre eux de manière à ce que des échanges de fluide puissent intervenir entre eux pour créer une translation différentiée desdites tiges des différents vérins lorsque un appui non uniforme s'exerce sur les dites extrémités de tiges de vérins.

8. Support flottant selon la revendication 4, **caractérisé en ce que** ladite pièce support de révolution (5) et ledit moyen de transfert de charge par articulation en rotation (5₁) comprennent une rotule mécanique constituée de 2 pièces rigides dont une pièce inférieure de révolution (8₁) reposant sur ladite plateforme et une pièce supérieure de révolution (8₂), ledit premier collier venant en appui directement ou indirectement sur ladite pièce supérieure, la dite pièce inférieure (8₁) présentant une surface supérieure de contact de section sphérique concave (8₁a) coopérant en glissement avec une surface convexe complémentaire de section sphérique (8₂b) constituant la surface inférieure de ladite pièce supérieure de ladite pièce support, l'une au moins desdites surfaces concave et convexe comprenant un revêtement anti friction, de préférence un revêtement de polymère.

9. Support flottant selon l'une des revendications 1 à 8, **caractérisé en ce que** lesdites première et deuxième surfaces de contact (1b, 2b) sont des surfaces de révolution tronconiques inclinées par rapport à l'axe (Z₁Z'₁) de ladite première pièce forgée, de préférence d'un angle (β) de 30 à 60°, de préférence encore d'environ 45°.

10. Support flottant selon l'une des revendications 1 à 9, **caractérisé en ce que** ladite troisième surface de contact (2c) dudit premier collier est une surface de révolution tronconique, de préférence sensiblement de même inclinaison que lesdites première et deuxième surfaces de contact tronconiques.

11. Support flottant selon l'une des revendications 1 à 10, **caractérisé en ce que** ledit premier collier coopère indirectement avec ledit moyen de support par l'intermédiaire d'un deuxième collier (3) verrouillé de façon amovible autour de la surface externe d'une partie dudit premier collier incluant ladite troisième surface de contact (2c), ledit deuxième collier comprenant une quatrième surface de contact de révolution (3a) sur laquelle ladite troisième surface de contact dudit premier collier est en appui, ledit deuxième collier présentant de préférence un diamètre externe maximal et un diamètre interne de passage plus grands que le diamètre externe maximal et respectivement diamètre interne de passage dudit premier collier, ledit deuxième collier présentant en partie inférieure une cinquième surface de contact de révolution (3b) coopérant directement ou indirectement en appui sur une sixième surface de contact de révolution (9a) en partie supérieure dudit moyen de support.

12. Support flottant selon la revendication 11, **caractérisé en ce qu'**il comprend un troisième collier (4) verrouillé autour d'une partie inférieure au moins d'un dit deuxième collier, le dit troisième collier comprenant une septième surface de contact de révolution supérieure (4a) sur laquelle vient en appui ladite cinquième surface de contact (3b) de révolution dudit deuxième collier et une huitième surface de contact de révolution (4b) inférieure venant directement en appui contre ladite sixième surface de contact (9a) en partie supérieure dudit moyen de support, de préférence ledit troisième collier présentant un diamètre externe maximal et un diamètre interne de passage plus grands que le diamètre externe maximal et respectivement le diamètre interne de passage dudit deuxième collier.

13. Support flottant selon l'une des revendications 1 à 12, **caractérisé en ce que** lesdits premier, deuxième et le cas échéant troisième colliers (2, 3, 4) sont constitués de plusieurs parties formant des sections angulaires (2₁, 2₂, 2₃) de collier(s) circulaire(s), lesdites parties ou sections angulaires de colliers étant verrouillées (2₄) entre elles de façon amovible ou de préférence seulement deux parties adjacentes (2₁-2₃) étant verrouillées entre elles, les autres parties (2₁-2₂, 2₂-2₃) étant articulées (2₅) entre elles à chaque extrémité de manière à pouvoir ouvrir ledit collier après déverrouillage de façon amovible.

14. Support flottant selon l'une des revendications 1 à 13, **caractérisé en ce que** ladite conduite est un ensemble de conduites coaxiales du type PiP et ladite première pièce forgée est une pièce de jonction à l'extrémité d'une première partie (10a) de l'ensemble de conduites coaxiales à assembler, ladite pièce de jonction comprenant des branches de révolution externes (11a,11b) et internes (12a,12b) délimitant deux cavités annulaires (13a,13b), dont des premières branches externe (11a) et interne (12a) sont soudées respectivement aux extrémités dites conduites externe (10-1) et interne (10-2) de ladite partie dudit ensemble de deux conduites coaxiales, ladite première protubérance (1a) étant formée sur la surface externe d'une zone de pleine épaisseur (13c) entre les deux cavités annulaires, et de préférence ladite première branche interne (12a) étant plus longue que ladite première branche externe (11a).

15. Support flottant selon l'une des revendications 1 à 14 comprenant un dispositif pour le raccordement et la pose de parties successives d'une conduite sous-marine depuis ledit support flottant, comprenant une tour de pose en J, **caractérisé en ce que** la dite plateforme (22) sur laquelle repose ledit moyen de support (5) est située en partie basse de ladite tour perpendiculairement à l'axe de la dite tour et le dit moyen de transfert de charges et d'articulation en rotation autorise une dite inclinaison dans un dit cône d'axe correspondant à l'axe de la dite tour.

16. Procédé de retenue et maintien d'une conduite sur un support selon la revendication 15, **caractérisé en ce qu'**on réalise les étapes dans lesquelles :
a) on soude à l'extrémité supérieure de ladite conduite une dite pièce forgée comprenant une dite première protubérance, et
b) on verrouille un dit premier collier en appui contre ladite première surface de contact de ladite première protubérance, et
c) on met en place le cas échéant, desdits troisième et deuxième colliers (4,3) verrouillés et en appui contre un dit moyen de support (5) solidaire d'une dite plateforme (22) en partie basse de ladite tour de pose en J (23), et
d) on descend une première partie de conduite comportant une dite première pièce forgée avec une dite première protubérance à l'extrémité supérieure de ladite première partie de conduite, à l'aide de dits bras de préhension (21) jusqu'à venir en appui sur ledit moyen de support (5) ou, le cas échéant, sur lesdits deuxième ou troisième colliers, ledit premier collier (2) étant verrouillé contre ladite première protubérance (1a), lesdits bras de préhension (21) retenant ledit premier collier, de préférence en sous-face d'une dite deuxième protubérance (2a).

17. Procédé de raccordement de 2 parties de conduite et pose en mer de la conduite ainsi raccordée à partir d'un support flottant (20) comprenant une tour de pose en J (23) selon la revendication 15 **caractérisé en ce qu'**on réalise les étapes suivantes dans lesquelles :
1- on met en place le cas échéant des dits troisième et deuxième colliers (4,3) verrouillés et en appui contre une dite pièce support (5) solidaire d'une dite plateforme (22) en partie basse de ladite tour de pose en J (23),
2- on descend une première partie (10a) de conduite comportant une dite première pièce forgée avec une dite première protubérance à l'extrémité supérieure de ladite première partie de conduite, à l'aide de dits bras de préhension (21) jusqu'à venir en appui sur ledit moyen de support (5) ou le cas échéant lesdits deuxième ou troisième collier, un dit premier collier (2) étant verrouillé contre ladite première protubérance (1a), lesdits bras de préhension retenant ledit premier collier de préférence en sous face d'une dite deuxième protubérance (2a) le cas échéant, et
3- on descend une deuxième partie de conduite (10b) comportant une dite première pièce forgée (1) avec une dite première protubérance à son extrémité supérieure à l'aide desdits bras de manutention coopérant avec ledit premier collier verrouillé autour de la dite première pièce forgée, jusqu'à positionner l'extrémité inférieure de ladite deuxième partie de conduite comportant de préférence une deuxième pièce de jonction forgée (1₁) avec ou sans dite première protubérance, mise bout à bout avec l'extrémité supérieure de ladite première pièce forgée à l'extrémité supérieure de ladite première partie de conduite, et
4- on réalise le raccordement de préférence par soudage des dites première et deuxième pièces forgées (1,1₁), et
5- on relève quelque peu la conduite raccordée à l'aide desdits bras de préhension (21) et on déverrouille et retire au moins ledit premier collier, et
6- on descend la conduite raccordée en mer à travers les orifices desdits premier et deuxième orifices de passage (5a,22a) dudit moyen de support (5) et dite plateforme (22).

## Claims

1. A floating support (20) comprising a retaining and holding device for retaining and holding an undersea pipe (10) in suspension from said floating support and a pipe, the pipe including a first forging (1) in the form of a body of revolution welded to the top end of said pipe and forming an internal tubular pipe section of substantially the same diameter as the diameter of said pipe, the support being **characterized in that** said retaining and holding device comprises:
a) a said first forging including a first peripheral radial protuberance (1a) on its outside surface, said first radial protuberance having on its underside a first contact surface of revolution (1b);
b) at least one first collar (2) releasably locked around and against said first forging via the underface of said first protuberance at said first contact surface (1b) of said first protuberance, said first contact surface co-operating by bearing against a second contact surface of revolution (2b) of said first collar, said first collar forming a second radial protuberance (2a), preferably a second protuberance in the form of a body of revolution, of diameter that is greater than the diameter of said first protuberance, said second protuberance being suitable for retaining the ends (21a) of gripper arms (21) installed on said floating support and serving to raise or lower said pipe in translation relative to said floating support substantially along the axis Z₁-Z₁' of said pipe at its top end; and
c) support means (5) resting on a stationary platform (22) having a first passage (22a) through which the pipe passes, said platform being secured to said floating support, said support means and said platform surrounding said pipe and directly or indirectly supporting said first collar, said first collar presenting a third contact surface of revolution (2c) on the underface of said first collar and co-operating by bearing directly or indirectly on said support means, said support means (5) including load transfer and rotary joint means (5₁) enabling the axis Z₁-Z₁' of said pipe to be guided in inclination at said top end within a virtual cone having an angle at the apex (2α) of less than 10°, preferably less than 5° relative to an axis ZZ' perpendicular to said platform, while ensuring that loads are distributed substantially uniformly over all of said contact surfaces (1b, 2b) when said pipe exerts non-uniform thrust on said contact surfaces (1b, 2b) and said support means, thereby causing a said inclination of the pipe.

2. A floating support according to claim 1, **characterized in that** said first protuberance (1a) presents a thickness (e) of 10 mm to 50 mm, preferably of less than 30 mm, more preferably of 15 mm to 25 mm.

3. A floating support according to claim 1 or claim 2, **characterized in that** said rotary joint means comprise joint means having a self centering effect on the pipe when the pipe is inclined by movements of said floating support (20).

4. A floating support according to any one of claims 1 to 3, **characterized in that** said support means (5) comprise a support part forming a body of revolution secured to said floating support and resting on said platform (22), said support part (5) having a central first through orifice (5a) of diameter greater than the diameter of said first protuberance, and said load transfer and rotary joint means enabling the axes of said first forging, said first collar, and said contact surfaces to rotate freely within the limit of said cone having an angle at the apex (2α) relative to the axis ZZ' of said support part (5) and of said central first through orifice (5a).

5. A floating support according to any one of claims 1 to 4, **characterized in that** said load transfer and rotary joint means (5₁) comprise flexible joint means with a laminated abutment (6) forming a body of revolution having a plurality of elastomer layers (6₁) interposed between rigid reinforcing layers (6₂) preferably made of metal, defining surfaces of revolution at rest having the same axis as the axis of revolution ZZ' of said first forging (1), said support part (5), and said first collar (2).

6. A floating support according to claim 5, **characterized in that** said flexible joint means is of the ball-joint type including said spherical laminated abutments.

7. A floating support according to any one of claims 1 to 3, **characterized in that** said load transfer and rotary joint means (5₁) and said support means (5) are constituted by a plurality of hydraulic actuators (7), preferably at least three hydraulic actuators, regularly distributed around said first passage (22a) of said platform (22) and around said pipe, the actuator cylinders (7₁) resting on said platform (22) around said first passage (22a) through which the pipe (10) passes, and the rods or pistons (7₂) of said actuators preferably having small ball-joints (7₃) free to rotate at their ends, said ends of the actuator rods directly or indirectly supporting said third contact surface (1c) of said first collar (2), said actuator cylinders being interconnected so that fluid can be exchanged between them in order to establish differential movements in translation of said rods of the various actuators when non-uniform thrust is exerted on said ends of the actuator rods.

8. A floating support according to claim 4, **characterized in that** said support part (5) forming a body of revolution and said load transfer and rotary joint means (5₁) comprise a mechanical ball-joint constituted by two rigid parts, namely a bottom part (8₁) forming a body of revolution resting on said platform, and a top part (8₂) forming a body of revolution, said first collar bearing directly or indirectly on said top part, said bottom part (8₁) presenting a concave top contact surface (8₁a) of spherical section slidably co-operating with a complementary convex surface (8₂b) of spherical section constituting the bottom surface of said top part of said support part, at least one of said concave and convex surfaces having an anti-friction coating, preferably a polymer coating.

9. A floating support according to any one of claims 1 to 8, **characterized in that** said first and second contact surfaces (1b, 2b) are frustoconical surfaces of revolution inclined relative to the axis Z₁-Z₁' of said first forging, preferably by an angle (β) lying in the range 30° to 60°, more preferably of about 45°.

10. A floating support according to any one of claims 1 to 9, **characterized in that** said third contact surface (2c) of said first collar is a frustoconical surface of revolution, preferably having the same angle of inclination as said first and second frustoconical contact surfaces.

11. A floating support according to any one of claims 1 to 10, **characterized in that** said first collar cooperates indirectly with said support means via a second collar (3) that is releasably locked around the outside surface of a portion of said first collar including said third contact surface (2c), said second collar including a second contact surface of revolution (3a) on which said third contact surface of said first collar bears, said second collar preferably presenting a maximum outside diameter and a through inside diameter that are larger than the maximum outside diameter and the through inside diameter respectively of said first collar, said second collar presenting in its bottom portion a fifth contact surface of revolution (3b) co-operating directly or indirectly by bearing against a sixth contact surface of revolution (9a) at the top portion of said support means.

12. A floating support according to claim 11, **characterized in that** it includes a third collar (4) locked around at least a bottom portion of a said second collar, said third collar including a top seventh contact surface of revolution (4a) on which said fifth contact surface of revolution (3b) of said second collar comes to bear, and a bottom eighth contact surface of revolution (4b) bearing directly against said sixth contact surface (9a) at the top portion of said support means, said third collar preferably presenting a maximum outside diameter and a through inside diameter that are greater than the maximum outside diameter and the through inside diameter respectively of said second collar.

13. A floating support according to any one of claims 1 to 12, **characterized in that** said first, second, and where appropriate third collars (2, 3, 4) are made up of a plurality of portions forming angular circular-collar sections (2₁, 2₂, 2₃), said angular collar sections or portions being releasably locked together (2₄) or preferably only two adjacent portions (2₁-2₃) being locked together, the other portions (2₁-2₂, 2₂-2₃) being hinged (2₅) to one another at each end so as to enable said collar to be open after it has been releasably unlocked.

14. A floating support according to any one of claims 1 to 13, **characterized in that** said pipe is a set of PiP type coaxial pipes and said first forging is a junction part at the end of a first portion (10a) of the coaxial pipe assembly for assembling, said junction parts having outer and inner branches (11a, 11b; 12a, 12b) forming bodies of revolution that defined two annular cavities (13a, 13b), with the outer and inner first branches (11a, 12a) being welded respectively to said outer and inner pipes (10-1, 10-2) of said first portion of said set of two coaxial pipes, said first protuberance (1a) being formed on the outside surface of a full-thickness zone (13c) between the two annular cavities, and said first inner branch (12a) preferably being longer than said first outer branch (11a) .

15. A floating support according to any one of claims 1 to 14, comprising a device for connecting and laying successive portions of an undersea pipe from said floating support, comprising a J-lay tower, the support being **characterized in that** said platform (22) on which said support means (5) rests is situated in a bottom portion of said tower perpendicularly to the axis of said tower, and said load transfer and rotary joint means allow a said inclination to take place within a said cone of axis corresponding to the axis of said tower.

16. A method of retaining and holding a pipe on a support according to claim 15, the method being **characterized in that** the following steps are performed:
a) welding a said forging including a said first protuberance to the top end of said pipe; and
b) locking a said first collar so that it bears against said first contact surface of said first protuberance; and
c) where appropriate, putting into place said third and second collars (4,3) locked and bearing against a said support means (5), secured to a said platform (22) at the bottom portion of said J-lay tower (23); and
d) lowering a first pipe portion including a said first forging with a said first protuberance at the top end of said first pipe portion using said gripper arms (21) until it comes into abutment on said support means (5) or, where appropriate, on said second or third collars, said first collar (2) being locked against said first protuberance (1a), said gripper arms (21) retaining said first collar preferably via the underface of a said second protuberance (2a).

17. A method of connecting together two pipe portions and of laying the pipe as connected together in this way at sea from a floating support (20) having a J-lay tower (23) according to claim 15, the method being **characterized in that** the following steps are performed:
1) where appropriate, putting said third and second collars (4, 3) into place locked and bearing against a said support part (5) secured to a said platform (22) at the bottom portion of said J-lay tower (23);
2) lowering a first pipe portion (l0a) including a said first forging with a said first protuberance at the top end of said first pipe portion by using said gripper arms (21) so that it comes to bear against said support means (5), or where appropriate against said second or third collar, a said first collar (2) being locked against said first protuberance (1a), said gripper arms retaining said first collar preferably via the underface of a said second protuberance (2a), where appropriate; and
3) lowering a second pipe portion (10b) including a said first forging (1) with a said first protuberance at its top end by using said gripper arms co-operating with said first collar locked around said first forging, until the bottom end of said second pipe portion, preferably including a second forging (1₁) with or without a said first protuberance, is positioned in abutment with the top end of said first forging at the top end of said first pipe portion; and
4) connecting said first and second forgings (1, 1₁) together, preferably by welding; and
5) lifting the connected-together pipe a little using said gripper arms (21) and unlocking and removing at least said first collar; and
6) lowering the connected-together pipe into the sea through the orifices of said first and second through orifices (5a, 22a) of said support means (5) and of said platform (22).

## Patentansprüche

1. Schwimmender Träger (20) umfassend eine Vorrichtung zum Sichern und Halten einer Unterwasserleitung (10) in schwebendem Zustand von dem schwimmenden Träger aus sowie eine Leitung, wobei die Leitung ein an das obere Ende der Leitung angeschweißtes erstes Rotationsschmiedeteil (1) aufweist, das einen rohrförmigen inneren Leitungsabschnitt mit im wesentlichen dem gleichen Durchmesser wie die Leitung bildet, **dadurch gekennzeichnet, daß** die Sicherungs- und Haltevorrichtung umfaßt:
a- ein erstes Schmiedeteil, das einen ersten umlaufenden radialen Vorsprung (1 a) an seiner Außenseite umfaßt, wobei der erste radiale Vorsprung an der Unterseite eine erste Rotationskontaktfläche (1 b) aufweist,
b- wenigstens einen ersten Bund (2), der um das und an dem erste(n) Schmiedeteil an der Unterseite des Vorsprungs im Bereich der ersten Kontaktfläche (1 b) des ersten Vorsprungs lösbar verriegelt ist, wobei die erste Kontaktfläche in Anlage mit einer zweiten Rotationskontaktfläche (2b) des ersten Bunds zusammenwirkt, wobei der erste Bund einen zweiten radialen Vorsprung (2a), vorzugsweise einen zweiten Rotationsvorsprung, mit größerem Durchmesser als der erste Vorsprung bildet, wobei der zweite Vorsprung geeignet ist, die Enden (21 a) eines Greifarms (21) zu halten, der an dem schwimmenden Träger angebracht ist und ermöglicht, die Leitung gegenüber dem schwimmenden Träger im wesentlichen in der Achse (Z₁Z'₁) der Leitung, an ihrem oberen Ende verschieblich hochzuziehen oder herabzulassen, und
c- ein Tragmittel (5), das auf einer festen Plattform (22), die in einem ersten Durchgang (22a) von der Leitung durchgriffen ist, aufliegt, wobei die Plattform mit dem schwimmenden Träger fest verbunden ist, wobei das Tragmittel und die Plattform die Leitung umgeben und den ersten Bund direkt oder indirekt tragen, wobei der erste Bund eine dritte Rotationskontaktfläche (2c) an der Unterseite des ersten Bunds aufweist und in Anlage mit dem Tragmittel direkt oder indirekt zusammenwirkt, wobei das Tragmittel (5) ein Lastübertragungs- und Drehgelenkmittel (5₁) umfaßt, das die Führung der Neigung der Achse (Z₁Z'₁) der Leitung an ihrem oberen Ende in einem virtuellen Kegel mit einem Kegelwinkel (2α) von unter 10°, vorzugsweise unter 5° gegenüber einer zu der Plattform senkrechten Achse (ZZ') ermöglicht und eine im wesentlichen gleichmäßige Verteilung der Lasten auf alle Kontaktflächen (1 b, 2b) sicherstellt, wenn die Leitung auf den Kontaktflächen (1 b, 2b) und dem Tragmittel nicht gleichmäßig aufliegt, was eine Neigung der Leitung bewirkt.

2. Schwimmender Träger nach Anspruch 1, **dadurch gekennzeichnet, daß** der erste Vorsprung (1a) eine Dicke (e) von 10 bis 50 mm, vorzugsweise von weniger als 30 mm, weiterhin vorzugsweise von 15 bis 25 mm aufweist.

3. Schwimmender Träger nach einem der Ansprüche 1 oder 2, **dadurch gekennzeichnet, daß** das Drehgelenkmittel ein Gelenkmittel ist mit einer Wirkung zum Selbstzentrieren der Leitung, wenn diese durch Bewegungen des schwimmenden Trägers (20) geneigt ist.

4. Schwimmender Träger nach einem der Ansprüche 1 bis 3, **dadurch gekennzeichnet, daß** das Tragmittel (5) ein mit dem schwimmenden Träger fest verbundenes Rotationstragteil ist, das auf der Plattform (22) aufliegt, wobei das Tragteil (5) eine erste mittlere Durchgangsöffnung (5a), die einen größeren Durchmesser als der erste Vorsprung aufweist, umfaßt, und das Lastübertragungs- und Drehgelenkmittel eine drehfreie Schwenkbarkeit der Achse des ersten Schmiedeteils, des ersten Bunds und der Kontaktflächen innerhalb der Grenze des Kegels mit dem Kegelwinkel (2α) gegenüber der Achse (ZZ') des Tragteils (5) und der ersten mittleren Durchgangsöffnung (5a) ermöglicht.

5. Schwimmender Träger nach einem der Ansprüche 1 bis 4, **dadurch gekennzeichnet, daß** das Lastübertragungs- und Drehgelenkmittel (5₁) ein flexibles Gelenkmittel ist, das einen aus Schichten bestehenden Rotationsanschlag (6) umfaßt, der eine Vielzahl von Elastomerschichten (6₁), eingefügt zwischen starren, vorzugsweise metallischen Verstärkungen (6₂) umfaßt, die im Ruhezustand Rotationsflächen mit gleicher Achse wie die Rotationsachse (ZZ') des ersten Schmiedeteils (1), des Tragteils (5) und des ersten Bunds (2) definieren.

6. Schwimmender Träger nach Anspruch 5, **dadurch gekennzeichnet, daß** das flexible Gelenkmittel von der Art Kugelgelenk ist, das aus Schichten bestehende kugelförmige Anschläge umfaßt.

7. Schwimmender Träger nach einem der Ansprüche 1 bis 3, **dadurch gekennzeichnet, daß** das Lastübertragungs- und Drehgelenkmittel (5₁) und das Tragmittel (5) von einer Vielzahl von Hydraulikzylindern (7), vorzugsweise wenigstens drei Hydraulikzylindern, die um den ersten Durchgang (22a) der Plattform (22) und die Leitung gleichmäßig verteil sind, gebildet sind, wobei die Zylinderkörper (7₁) auf der Plattform (22) um den ersten Durchgang (22a) herum, den die Leitung (10) durchgreift, aufliegen, und wobei die Stangen oder Kolben (7₂) der Zylinder vorzugsweise an ihren Enden kleine drehfreie Kugelgelenke (7₃) umfassen, wobei die Enden der Zylinderstangen direkt oder indirekt die dritte Kontaktfläche (1 c) des ersten Bunds (2) unterstützen, wobei die Zylinderkörper derart miteinander verbunden sind, daß zwischen ihnen Fluidaustauschvorgänge stattfinden können, um eine abweichende Verschiebung der Stangen der verschiedenen Zylinder herbeizuführen, wenn es auf den Enden der Zylinderstangen zu einer nicht gleichmäßigen Auflage kommt.

8. Schwimmender Träger nach Anspruch 4, **dadurch gekennzeichnet, daß** das Rotationstragteil (5) und das Mittel zur Lastübertragung mittels Drehgelenk (5₁) ein mechanisches Kugelgelenk umfassen, das von zwei starren Teilen gebildet ist, darunter ein unteres Rotationsteil (8₁), das auf der Plattform aufliegt, und ein oberes Rotationsteil (8₂), wobei der erste Bund direkt oder indirekt an dem oberen Teil zur Anlage kommt, wobei das untere Teil (8₁) eine obere Kontaktfläche mit kugelförmigem konkaven Querschnitt (8₁a) aufweist, die mit einer ergänzenden konvexen Fläche mit kugelförmigem Querschnitt (8₂b), welche die untere Fläche des oberen Teils des Tragteils bildet, gleitend zusammenwirkt, wobei wenigstens eine der konkaven und konvexen Flächen eine reibungsvermindernde Beschichtung, vorzugsweise eine Polymerbeschichtung aufweist.

9. Schwimmender Träger nach einem der Ansprüche 1 bis 8, **dadurch gekennzeichnet, daß** die erste und die zweite Kontaktfläche (1 b, 2b) kegelstumpfförmige Rotationsflächen sind, die gegenüber der Achse (Z₁Z'₁) des ersten Schmiedeteils geneigt sind, vorzugsweise um einen Winkel (β) zwischen 30 und 60°, weiterhin vorzugsweise um etwa 45°.

10. Schwimmender Träger nach einem der Ansprüche 1 bis 9, **dadurch gekennzeichnet, daß** die dritte Kontaktfläche (2c) des ersten Bunds eine kegelstumpfförmige Rotationsfläche, vorzugsweise im wesentlichen mit der gleichen Neigung wie die erste und die zweite kegelstumpfförmige Kontaktfläche ist.

11. Schwimmender Träger nach einem der Ansprüche 1 bis 10, **dadurch gekennzeichnet, daß** der erste Bund über einen zweiten Bund (3), der um die Außenseite eines Teils des ersten Bunds, welcher die dritte Kontaktfläche (2c) einschließt, lösbar verriegelt ist, indirekt mit dem Tragmittel zusammenwirkt, wobei der zweite Bund eine vierte Rotationskontaktfläche (3a) umfaßt, an der die dritte Kontaktfläche des ersten Bunds in Anlage ist, wobei der zweite Bund vorzugsweise einen maximalen Außendurchmesser und einen Durchgangsinnendurchmesser aufweist, die größer als der maximale Außendurchmesser bzw. der Durchgangsinnendurchmesser des ersten Bunds sind, wobei der zweite Bund im unteren Teil eine fünfte Rotationskontaktfläche (3b) aufweist, die in Anlage mit einer sechsten Rotationskontaktfläche (9a) im oberen Teil des Tragmittels direkt oder indirekt zusammenwirkt.

12. Schwimmender Träger nach Anspruch 11, **dadurch gekennzeichnet, daß** er einen dritten Bund (4) umfaßt, der um einen unteren Teil wenigstens eines zweiten Bunds verriegelt ist, wobei der dritte Bund eine obere siebte Rotationskontaktfläche (4a), an der die fünfte Rotationskontaktfläche (3b) des zweiten Bunds zur Anlage kommt, sowie eine untere achte Rotationskontaktfläche (4b) aufweist, die direkt an der sechsten Kontaktfläche (9a) im oberen Teil des Tragmittels zur Anlage kommt, wobei vorzugsweise der dritte Bund einen maximalen Außendurchmesser und einen Durchgangsinnendurchmesser aufweist, die größer als der maximale Außendurchmesser bzw. der Durchgangsinnendurchmesser des zweiten Bunds sind.

13. Schwimmender Träger nach einem der Ansprüche 1 bis 12, **dadurch gekennzeichnet, daß** der erste, der zweite und gegebenenfalls der dritte Bund (2, 3, 4) aus mehreren Teilen bestehen, die Winkelabschnitte (2₁, 2₂, 2₃) eines (von) kreisförmigen Bunds (Bünden) bilden, wobei die Bundteile oder -winkelabschnitte untereinander lösbar verriegelt sind (2₄) oder vorzugsweise lediglich zwei benachbarte Teile (2₁-2₃) untereinander verriegelt sind, wobei die anderen Teile (2₁-2₂, 2₂-2₃) an jedem Ende gelenkig miteinander verbunden sind (2₅), so daß der Bund nach dem Entriegeln lösbar geöffnet werden kann.

14. Schwimmender Träger nach einem der Ansprüche 1 bis 13, **dadurch gekennzeichnet, daß** die Leitung eine Anordnung von koaxialen Leitungen vom Typ PiP ist und das erste Schmiedeteil ein Verbindungsteil am Ende eines ersten Teils (10a) der Anordnung von zu verbindenden koaxialen Leitungen ist, wobei das Verbindungsteil äußere (11 a, 11 b) und innere (12a, 12b) Rotationsschenkel, die zwei ringförmige Hohlräume (13a, 13b) begrenzen, umfaßt, von denen ein erster äußerer (11a) und ein erster innerer (12a) Schenkel an die Enden einer äußeren Leitung (10-1) bzw. inneren Leitung (10-2) des Teils der Anordnung von zwei koaxialen Leitungen angeschweißt sind, wobei der erste Vorsprung (1a) an der Außenseite eines Bereichs massiver Dicke (13c) zwischen den beiden ringförmigen Hohlräumen angeformt ist und wobei vorzugsweise der erste innere Schenkel (12a) länger als der erste äußere Schenkel (11a) ist.

15. Schwimmender Träger nach einem der Ansprüche 1 bis 14, umfassend eine Vorrichtung für das Verbinden und das Verlegen aufeinanderfolgender Teile einer Unterwasserleitung vom dem schwimmenden Träger aus, der einen J-förmigen Verlegeturm umfaßt, **dadurch gekennzeichnet, daß** die Plattform (22), auf der das Tragmittel (5) aufliegt, im unteren Teil des Turms senkrecht zur Achse des Turms gelegen ist und das Lastübertragungs- und Drehgelenkmittel eine Neigung in einem Kegel mit einer Achse, die der Achse des Turms entspricht, zuläßt.

16. Verfahren zum Sichern und Halten einer Leitung an einem Träger nach Anspruch 15, **dadurch gekennzeichnet, daß** die Schritte durchgeführt werden, bei denen:
a) an dem oberen Ende der Leitung ein Schmiedeteil, das einen ersten Vorsprung aufweist, angeschweißt wird und
b) ein erster Bund in Anlage an der ersten Kontaktfläche des ersten Vorsprungs verriegelt wird und
c) gegebenenfalls ein dritter und ein zweiter Bund (4, 3) verriegelt und in Anlage an einem Tragmittel (5), das mit einer Plattform (22) im unteren Teil des J-förmigen Verlegeturms (23) fest verbunden ist, angebracht werden und
d) ein erster Leitungsteil, der ein erstes Schmiedeteil mit einem ersten Vorsprung am oberen Ende des ersten Leitungsteils umfaßt, mit Hilfe von Greifarmen (21) soweit herabgelassen wird, bis er an dem Tragmittel (5) oder gegebenenfalls an dem zweiten oder dem dritten Bund in Anlage gelangt, wobei der erste Bund (2) an dem ersten Vorsprung (1 a) verriegelt ist, wobei die Greifarme (21) den ersten Bund, vorzugsweise an der Unterseite eines zweiten Vorsprungs (2a) festhalten.

17. Verfahren zum Verbinden von zwei Teilen einer Leitung und zum Verlegen der so zusammengesetzten Leitung im Meer von einem schwimmenden Träger (20) aus, mit einem J-förmigen Verlegeturm (23), nach Anspruch 15, **dadurch gekennzeichnet, daß** die folgenden Schritte durchgeführt werden, bei denen:
1- gegebenenfalls ein dritter und ein zweiter Bund (4, 3) verriegelt und in Anlage an einem Tragteil (5), das mit einer Plattform (22) im unteren Teil des J-förmigen Verlegeturms (23) fest verbunden ist, angebracht werden,
2- ein erster Leitungsteil (10a), der ein erstes Schmiedeteil mit einem ersten Vorsprung am oberen Ende des ersten Leitungsteils umfaßt, mit Hilfe von Greifarmen (21) soweit herabgelassen wird, bis er an dem Tragmittel (5) oder gegebenenfalls an dem zweiten oder dem dritten Bund in Anlage gelangt, wobei ein erster Bund (2) an dem ersten Vorsprung (1 a) verriegelt ist, wobei die Greifarme den ersten Bund, vorzugsweise an der Unterseite eines gegebenenfalls zweiten Vorsprungs (2a) festhalten, und
3- ein zweiter Leitungsteil (10b), der ein erstes Schmiedeteil (1) mit einem ersten Vorsprung an seinem oberen Ende umfaßt, mit Hilfe von Förderarmen, die mit dem um das erste Schmiedeteil herum verriegelten ersten Bund zusammenwirken, soweit herabgelassen wird, bis das untere Ende des zweiten Leitungsteils, das vorzugsweise ein zweites Schmiedeverbindungsteil (1₁) mit oder ohne ersten Vorsprung umfaßt, stumpf verbunden mit dem oberen Ende des ersten Schmiedeteils am oberen Ende des ersten Leitungsteils positioniert ist, und
4- das erste und das zweite Schmiedeteil (1, 1₁) miteinander verbunden, vorzugsweise miteinander verschweißt werden und
5- die zusammengesetzte Leitung mit Hilfe der Greifarme (21) etwas hochgehoben wird und wenigstens der erste Bund entriegelt und entfernt wird und
6- die zusammengesetzte Leitung durch die Öffnungen der ersten und der zweiten Durchgangsöffnung (5a, 22a) des Tragmittels (5) und der Plattform (22) ins Meer herabgelassen wird.
